(19) Europäisches Patentamt
European Patent Office
Office européen des brevets

(11) **EP 4 425 335 A2**

(12) **EUROPEAN PATENT APPLICATION**

(43) Date of publication:
 **04.09.2024 Bulletin 2024/36**

(51) International Patent Classification (IPC):
 ***G06F 11/07*** (2006.01)    ***G06F 11/34*** (2006.01)
 ***G06N 7/01*** (2023.01)

(21) Application number: **24157128.0**

(22) Date of filing: **12.02.2024**

(52) Cooperative Patent Classification (CPC):
 **G06F 11/3452; G06F 11/0751; G06N 7/01;**
 G06F 2201/81

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **13.02.2023 US 202363445075 P
 31.01.2024 US 202418428226**

(71) Applicant: **Dynatrace LLC
 Waltham, MA 02451 (US)**

(72) Inventors:
 • **Natschlaeger, Thomas
 Waltham, 02451 (US)**
 • **Zuschrader, Magdalena
 Waltham, 02451 (US)**
 • **Kepplinger, Bernhard
 Waltham, 02451 (US)**

(74) Representative: **Bittner, Thomas L.
 Boehmert & Boehmert
 Anwaltspartnerschaft mbB
 Pettenkoferstrasse 22
 80336 München (DE)**

(54) **TIME SERIES FORECASTING OF APPLICATION MONITORING DATA AND OBSERVABILITY DATA BY QUANTILE REGRESSION**

(57) The disclosure concerns the detection of anomalies and the forecasting of application monitoring data in a distributed computing environment. The methods work well for highly correlated input data containing noise and outliers. In case of detecting an anomaly in application monitoring data, the objectives are solved by training at least two probabilistic models forecasting lower and higher quantile values based on training time series data, by receiving and extracting an actual time series, by calculating lower and a higher quantile forecasts based on the probabilistic models and the time series, by calculating a low threshold and a high threshold based on the lower and a higher quantile forecasts, and by receiving and comparing a new value to the low and high thresholds. If the new value is either smaller than the low threshold or higher than the high threshold, the new value is marked as an anomaly.

Fig. 17

EP 4 425 335 A2

**Description**

The disclosure concerns the field of application monitoring and observability within the broad field of information technology. In particular, the disclosure concerns the forecasting of time series of application monitoring data, observability data, and data observability data by quantile regression. The forecast data can be used for various purposes, e.g., for anomaly detection of reported signals, predictive capacity management, behavior prediction, pattern prediction etc.

Background

Application performance monitoring (APM) and observability software allows users, such as IT operators, site reliability engineers, cloud and platform operators, application developers, and product owners, to observe and analyze the application health, performance, and user experience. Such APM and observability software may be self-hosted software, vendor-managed hosted software, or software as a service (SaaS). In order to monitor the performance of applications, computer or entire computer environments, massive amounts of data are logged, such as log lines, traces from applications, metrics etc. Such data, here referred to as application monitoring and observability data, supplemented by the temporal dimension (i.e. the date and time when a data signal was created or logged) of the data constitutes time series data.

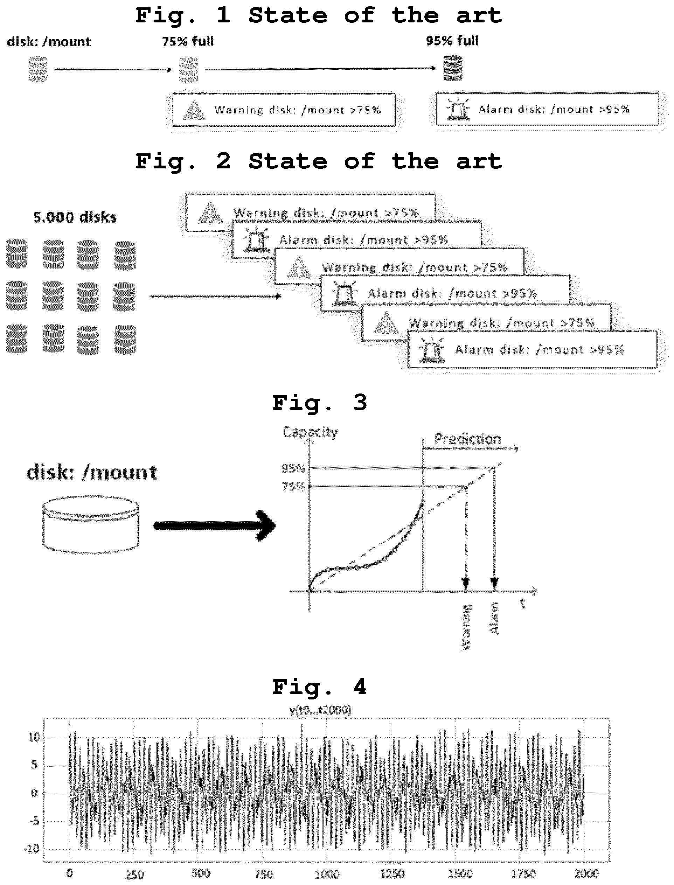

Two examples describing the state of the art in capacity management of hard drive disks (HDD) are shown in Figs. 1 and 2. Fig. 1 depicts the simplest case with only one HDD or disk mount. When the used capacity of the HDD exceeds 75%, a warning is given to the operator. When the used capacity exceeds 95%, an alarm is given to the operator. In response to the warning or the alarm, either another disk is added to the computer or computing system, or the size of the disk mount is increased, e.g. by increasing the quota of a partition. By doing so, a system crash can be avoided. A second example is depicted in Fig. 2. In this case, the computer or computing system comprises 5000 HDDs. As the disks of the disk stack fill up at individual rates, potentially many warnings and/or alarms are given to the operator related to individual disks of the disk stack. This increases the workload of the operator and makes capacity planning difficult. In addition, the risk of a system failure increases.

The basic idea underlying the disclosure is to use historical time series of application monitoring and observability data to forecast or predict the development of that data in future.

Various methods exist to forecast time series data into the future. The most commonly used method for predicting time series data is by minimum least square regression, i.e. to minimize the mean square error between the actual values of the time data and the value predicted by least square regression.

Fig. 3 shows an example for the predictive capacity management of an HDD. The capacity of the disk is recorded at certain points in time (see dots making up the solid line). These capacity readings in combination with the date and time t of the readings constitute a time series. Based on the time series, a prediction of the HDD capacity over time is done to minimize the mean square error between the actual readings and the prediction, see the dashed line. The times when the predicted HDD capacity hit the warning threshold of 75% and the alarm threshold of 95% can be derived from the prediction.

Despite being widely used today, investigations by the applicant have shown that the minimum least square regression is quite unsuitable to robustly forecast application monitoring and observability data. This is due to several reasons: First, predictions of time series data by minimum least square regression are sensitive to both noise and outliers. In other words, a single or multiple outliers can have a significant influence on the predicted data, making the prediction potentially unreliable. Second, minimum least square regression is unsuitable for highly correlated inputs. In other words, the time series is only predicted sufficiently accurately if i) the data lacks both noise and outliers and ii) the input data is uncorrelated to a high degree. Put differently, the forecasting of time series of application monitoring and observability data is robust only when certain assumptions are fulfilled. How the robust forecasting of time series of application monitoring and observability data can be improved without having to make assumptions about the underlying data is not known.

This section provides background information related to the present disclosure which is not necessarily prior art.

Summary

This section provides a general summary of the disclosure, and is not a comprehensive disclosure of its full scope or all of its features.

The object of the disclosure is to find i. a method for anomaly detection of application monitoring data, observability data, and data observability data, and ii. a method for forecasting a time series of application monitoring data, observability data and data observability data. These methods shall be robust against both noise and outliers and shall work reliably for highly correlated time series. In addition, the methods shall be efficient in terms of CPU load and memory consumption.

The first aspect of the disclosure is solved by a computer-implemented method for detecting an anomaly in application monitoring data in a distributed computing environment, comprising:

> receiving, by a computer processor, training time series data for a given variable, y, in the distributed computing environment;
>
> training, by the computer processor, a first probabilistic model using the training time series data, where the first probabilistic model predicts a lower quantile value corresponding to a lower quantile $\tau_{low}$ for the given variable;
>
> training, by the computer processor, a second probabilistic model using the training time series data, where the second probabilistic model predicts a higher quantile value corresponding to a higher quantile $\tau_{high}$ for the given variable, and the higher quantile is larger than the lower quantile ($\tau_{high} > \tau_{low}$);
>
> receiving, by a computer processor, time series data for the given variable, y, in the distributed computing environment;
>
> extracting, by the computer processor, a time series, $(y_0, \ldots, y_{n-1})$, for the given variable, where the time series comprises the last n values of the time series data;
>
> calculating, by the computer processor, a lower quantile forecast $\hat{y}_{n\_low}$ using the time series and the first probabilistic model;
>
> calculating, by the computer processor, a higher quantile forecast $\hat{y}_{n\_high}$ using the time series and the second probabilistic model;
>
> calculating, by the computer processor, a low threshold $y_{lowT}$ for the given variable and a high threshold $y_{highT}$ for the given variable based on the lower quantile forecast $\hat{y}_{n\_low}$ and the higher quantile forecast $\hat{y}_{n\_low}$;
>
> receiving, by the computer processor, a new value, $y_n$, for the given variable;
>
> comparing, by the computer processor, the new value of the given variable to the low threshold $y_{lowT}$ and to the high threshold $y_{highT}$; and
>
> marking, by the computer processor, the new value, $y_n$, of the given variable as an anomaly in response to the new value being one of less than the low threshold or greater than the high threshold, i.e. if $y_n < y_{lowT}$ or $y_n > y_{highT}$.

Based on the training time series for a given variable data multiple, i.e. at least two, preferably at least three, probabilistic models are trained to forecast the quantitative development of the time series in future. The training time series data is used to train the models such that a first model of the multiple models can predict at least one lower quantile, e.g. the 10% quantile, of the time series and a second model of the multiple models can predict at least one higher quantile, e.g. the 90% quantile, of the time series. The probabilistic models are assumed to be of n-th order, e.g. considering n autoregressive features in order to compute a forecast value. After having received, by a computer processor, time series data for the given variable, y, in the distributed computing environment and extracting, by the computer processor, the last n values of the time series data, $(y_0, \ldots, y_{n-1})$, for the given variable, the models are used to predict the future development of the time series by calculating at least one lower quantile forecast and at least one higher quantile forecast for the time series. Depending on the lower quantile forecast and the higher quantile forecast a lower threshold and a higher threshold are calculated. After having received a new value, $y_n$, and comparing the new value to the lower and higher thresholds, $y_n$ is marked if the $y_n$ is greater than the higher threshold, i.e. $y_n > y_{highT}$, or if $y_n$ is smaller than the lower threshold, i.e. $y_n < y_{lowT}$.

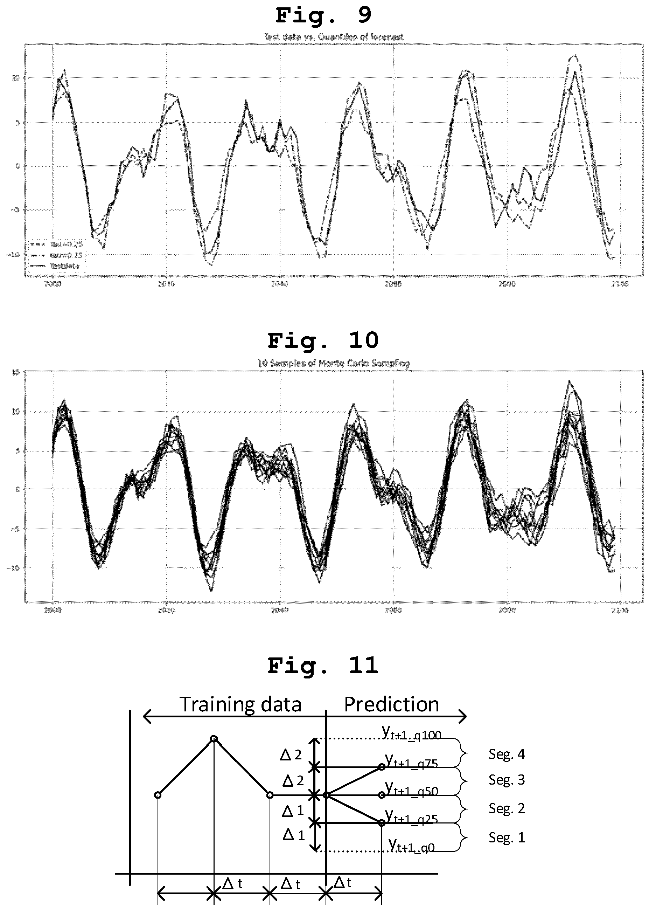

The lower threshold can be equal or different to the lower quantile forecast. Likewise, the higher threshold can be equal or different to the higher quantile forecast. In one simple approach, the difference between the lower and higher quantile forecasts defines the difference between the lower quantile forecast and the lower threshold, such that the lower threshold < the lower quantile forecast. In an analogue manner, the difference between the lower and higher quantile forecasts can also define the difference between the higher quantile forecast and the higher threshold, such that the higher threshold > the higher quantile forecast. Typically, there is a functional relationship between the lower quantile forecast, the higher quantile forecast... as inputs and the lower and higher threshold values as outputs. Different strategies exist and can be adapted as required. Fig. 11 shows one such example, where the higher threshold is $y_{t+1\_q100}$ and the lower threshold is $y_{t+1\_q0}$. Typically, the low and high thresholds are calculated by one dimensional inter- or extrapolation, e.g. by piecewise linear interpolation, cubic interpolation or cubic spline interpolation.

In the next time step, n+1, the new value, yn, of the given variable, y, is appended by the computer processor at the end of the time series. After this, another time series, called a next time series, $(y_1, \ldots, y_n)$, is extracted from the time series for the given variable, y, where the next time series comprises the last n values of the time series. The next time series is used to calculate a lower quantile forecast using and the first probabilistic model and a higher quantile forecast using the second probabilistic model. Based on the lower and higher quantile forecasts a low threshold for the given variable and a high threshold for the given variable are calculated. After having received a new next value, $y_{n+1}$, for the given variable, the next new value is compared to the low threshold and to the high threshold. The computer processor marks the next new value as an anomaly if the next new value is either less than the low threshold or greater than the high threshold.

According to a preferred embodiment, calculating the low and high thresholds comprises: determining a minimum value, e.g. a 0% quantile value, for the given variable using the lower quantile forecast and the higher quantile forecast and determining a maximum value, e.g. a 100% quantile value, for the given variable using the lower quantile forecast and the higher quantile forecast, thereby defining a range for the given variable; generating random numbers evenly distributed between 0 and 1; for each random number, mapping the given random number to a corresponding value in the range, thereby generating a set a values for the given variable; and determining the low threshold and the high threshold from the set of values for the given variable.

Doing this, multiple random numbers, e.g. N random numbers evenly distributed between 0 and 1, are mapped to the range for the given variable, such that the mapped N numbers represent a distribution in the range. The low and high threshold values are typically quantile values, e.g. a 10% quantile for the low threshold and a 90% for the high threshold.

Mapping a given random number to a corresponding value in the range is for example done by linear interpolation.

According to a typical case, the low threshold is set to a quantile value lower than the lower quantile value and the high threshold is set to a quantile value higher than the higher quantile value.

According to one simple embodiment, least one of the first probabilistic model and the second probabilistic model is a linear regression model.

According to a very preferred embodiment, training at least one of the first probabilistic model and the second probabilistic model uses the *Regularized Smoothed Iterative Least Square* (*RSILS*) method, which minimizes the pinball loss for the probabilistic models. The *RSILS* algorithm works best if the training time series comprises more or equal than 1000 values.

According to a another very preferred embodiment, training at least one of the first probabilistic model and the second probabilistic model uses the Coordinate Descent (*CD*) method. The *CD* algorithm works best if the training time series comprises less than 1000 values.

In some typical cases, the lower quantile and the higher quantile are symmetrical in relation to the median.

The first variant of the second aspect of the disclosure is solved by a computer-implemented method for forecasting application monitoring data in a distributed computing environment, comprising:

a) receiving, by a computer processor, training time series data for a given variable, y, in the distributed computing environment;

b) training, by the computer processor, a first probabilistic model using the training time series data, where the first probabilistic model predicts a lower quantile value corresponding to a lower quantile for the given variable;

c) training, by the computer processor, a second probabilistic model using the training time series data, where the second probabilistic model predicts a higher quantile value corresponding to a higher quantile for the given variable, and the higher quantile is larger than the lower quantile;

d) receiving, by a computer processor, time series data for the given variable, y, in the distributed computing environment;

e) computing multiple paths of forecasts by:

i. extracting, by the computer processor, a time series, $y_0, \ldots, y_{n-1}$, for the given variable, where the time series comprises the last n data points of the time series data;

ii. calculating, by the computer processor, a lower quantile forecast using the time series and the first probabilistic model;

iii. calculating, by the computer processor, a higher quantile forecast using the time series and the second probabilistic model;

iv. determining a minimum value for the given variable using the lower quantile forecast and the higher quantile forecast and determining a maximum value for the given variable using the lower quantile forecast and the higher quantile forecast, thereby defining a range for the given variable;

v. generating a random number evenly distributed between zero and one;

vi. generating a forecast value for the given variable by mapping the random number to a corresponding value in the range;

vii. appending, by the computer processor, the forecast value of the given variable, y, at the end of the time series;

viii. repeating steps i-vii until a stop criterion is reached;

f) identifying, by the computer processor, quantiles in the multiple paths of forecasts; and

g) reporting the quantiles to the method customer.

According to the first variant for forecasting a time series of application monitoring data, observability data and data observability data at least two probabilistic models, i.e. a first model being able to predict lower quantile values and a second model being able to predict higher quantile values for the given variable, preferably three probabilistic models, i.e. a first and a second model as above and a third model being able to predict median values for the given variable, are trained from a training time series data. The probabilistic models are assumed to be of n-th order with n > 1, e.g. considering n autoregressive features in order to compute a forecast value. After having received, by a computer processor, time series data for the given variable, y, in the distributed computing environment and extracting, by the computer processor, the last n values of the time series data, $(y_0, \ldots, y_{n-1})$, for the given variable, the models are used to predict the future development of the time series by calculating at least one lower quantile forecast and at least one higher quantile forecast for the time series. In forecasting not just a single timestep but typically many timesteps into the future are computed. According to the 1st variant, multiple paths of forecast are calculated one after the other. Having received time series data for the given variable, y, i) the last n data points of the time series are extracted from the time series data constituting the time series for the 1st step. Based on the time series, the computer processor ii) calculates a lower quantile forecast using the first probabilistic model and iii) a higher quantile forecast using the second probabilistic model. Based on the lower and higher quantile forecasts, iv) minimum and maximum values for the given variable are determined thereby defining a range for the given variable. Subsequently, a random number evenly distributed between zero and one is generated in step v and vi) a forecast value for the given variable is generated by mapping the random number to a corresponding value in the range. The forecast value is then vii) appended to the end of the time series and i)another time series is extracted using the last n data points from the time series. Steps i-vii are repeated until the path of forecast reaches a prediction horizon, e.g. 100 time-steps into the future.

At least one of the first probabilistic model, and the second probabilistic model may be further defined as a linear regression model.

The method may further comprise training at least one of the first probabilistic model, and the second probabilistic model using a Regularized Smoothed Iterative Least Square method.

Training at least one of the first probabilistic model and the second probabilistic model may minimize the pinball loss.

The method may comprise training at least one of the first probabilistic model, and the second probabilistic model using a Coordinate Descent method.

The lower quantile and the higher quantile may be symmetrical in relation to the median.

The multiple forecast values at the individual time steps are used to identify quantile values in the multiple paths of forecasts, and these quantile values are reported to the method customer.

The second variant of the second aspect of the disclosure is solved by a computer-implemented method for forecasting application monitoring data in a distributed computing environment, comprising:

a) receiving, by a computer processor, training time series data for a given variable, y, in the distributed computing environment;

b) training, by the computer processor, a first probabilistic model using the training time series data, where the first probabilistic model predicts a lower quantile value corresponding to a lower quantile for the given variable;

c) training, by the computer processor, a second probabilistic model using the training time series data, where the second probabilistic model predicts a higher quantile value corresponding to a higher quantile for the given variable, and the higher quantile is larger than the lower quantile;

d) receiving, by a computer processor, time series data for the given variable, y, in the distributed computing environment;

e) extracting, by the computer processor, a time series, $y_0, \ldots, y_{n-1}$, for the given variable, y, where the time series comprises the last n data points of the time series data;

f) calculating, by the computer processor, a lower quantile forecast using the time series and the first probabilistic model;

g) calculating, by the computer processor, a higher quantile forecast using the time series and the second probabilistic model;

h) determining a minimum value for the given variable using the lower quantile forecast and the higher quantile forecast and determining a maximum value for the given variable using the lower quantile forecast and the higher quantile forecast, thereby defining a range for the given variable;

i) generating random numbers evenly distributed between zero and one;

j) for each random number, mapping the given random number to a corresponding value in the range, thereby generating a set of forecast values for the given variable;

k) for each forecast value in the set of forecast values, appending, by the computer processor, a given forecast value to the time series and extracting the last n data points of the time series;

l) repeating steps f-k until a stop criterion is reached;

m) identifying, by the computer processor, quantiles in the forecast values;

n) reporting the quantiles to the method customer.

The difference between the 1st variant and the 2nd variant is that in the former case multiple paths of forecasts are computed until the end of the prediction horizon, and the values of the multiple paths are used to identify quantile values at individual time steps, whereas in the latter case, multiple random numbers are generated, multiple forecast values are generated by mapping these numbers to a range, e.g. between a virtual 0 and 100%. The forecast values at a certain time step can be used to derive the quantile values at that time step.

Contrary to the method for anomaly detection, two, preferably at least three, models are being trained to predict a lower quantile value, a median value, and an upper quantile value of the time series. Another difference between the methods for anomaly detection and forecasting is that the development of the time series is predicted not just for one time step, but for at least three time steps, typically many more.

In the methods for forecasting, the calculated lower and higher quantile forecasts are used to perform statistical experiments by random sampling the range between a minimum value (e.g. the virtual 0% quantile) and a maximum value (e.g. the virtual 100% quantile) of the forecasts. Based on the lower quantile forecast for $\tau = \tau_{low}$ and the higher quantile forecast for $\tau = \tau_{high}$ the virtual 0% and 100% quantiles can be calculated. In every statistical experiment an evenly distributed random number between 0 and 1 is generated which is mapped to the range between the virtual 0% and 100% quantiles by linear interpolation. The mapped value of the random number constitutes one random forecast. The random sampling is performed multiple times and one or more quantiles can be calculated based on the multiple sampled forecasts. Note that the quantiles derived from random sampling can be different to the quantiles of the multiple probabilistic models.

In the fields mentioned above, the presented methods can be utilized e.g. for *predictive capacity management*, *behavior prediction* as a means of training a model to predict the behavior of an entity, such as a service in production, or *pattern prediction* as a possibility to predict the occurrence of patterns, such as log lines, events or problems based on historic behavior.

It is advantageous if the probabilistic models are considering at least one of i) autoregressive features in the time series data (e.g. to model local time dependencies and to react to local deviations from seasonality), ii) time and calendar features in the time series data (e.g. to model patterns depending on weekday, time of week, time of day), and iii) seasonal patterns in the time series data (e.g. to find seasonal patterns in the time series data occurring monthly, weekly, daily, hourly, or minutely or combinations thereof by robust versions of the Fourier Transformation.

Examples of models having autoregressive features are given in the application examples. SARIMA (Seasonal Autoregressive Integrated Moving Average) and SARIMAX (Seasonal ARIMA with eXogenous regressors) are just two examples of models considering seasonality features.

In many real-world applications, the stop criterion is a temporal prediction horizon TPH, e.g. that the number of predictions n $\geq$ TPH.

In some cases it is beneficial if the quantiles of the first and the third model are defined symmetrical to the 0.5 quantile, e.g. 0.1 and 0.9, or 0.25 and 0.75.

It may be beneficial if before the start of the training of a probabilistic model a data validation is performed, the data validation checking whether the time series data is sufficiently large for forecasting and/or the number of missing values in the historical data is sufficiently low.

After the data validation step and before the start of the training of the probabilistic models it may be expedient to decide on which algorithm shall be used to solve optimization problem $\hat{y} = X \cdot \beta$.

Generally it is expedient to use the *Regularized Smoothed Iterative Least Squares (RSILS)* algorithm if the time series comprises more or equal than 1000 values.

Conversely, it is expedient to use the *Coordinate Descent (CD)* algorithm if the time series comprises less than 1000 values.

The probabilistic models can be updated to the latest developments by repeating the training of the probabilistic models periodically, such as daily, weekly, monthly or multiples of these.

Typically, the quantiles found by performing the statistical experiments are output to a customer, which may be a person, a piece of software etc.

In some cases, it may be expedient to use the quantiles found by performing the statistical experiments in the linear interpolated numbers as lower quantile forecast and higher quantile forecast in anomaly detection.

Further areas of applicability will become apparent from the description provided herein. The description and specific examples in this summary are intended for purposes of illustration only and are not intended to limit the scope of the present disclosure.

Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:

| | |
|---|---|
| Fig. 1 | shows a first scheme of a hard disk drive (HDD) capacity management system for one disk according to the prior art, |
| Fig. 2 | shows a second scheme of an HDD capacity management system for a disk stack with 5000 disks according to the prior art, |
| Fig. 3 | shows the predicted disk capacity for a HDD based on a time series by minimum least square regression, |
| Figs. 4, 5 and 6 | show plots of training data for the 1st application example, |
| Figs. 7a and 7b | show the unsmoothed and smoothed quantile loss functions for $\tau = 0.1$, respectively, |
| Fig. 8 | shows an excerpt of the feature matrix X for the 1st application example, |
| Fig. 9 | shows the development of the lower quantile forecast $\tau = 0.25$ and the higher quantile forecast $\tau = 0.75$ compared to the test data, |
| Fig. 10 | shows ten forecasted paths by random sampling (Monte Carlo Sampling) for the 1st application example, |
| Figs. 11 and 20 | show examples for obtaining the virtual 0% and 100% quantiles from $\tau = 0.25$, median and $\tau = 0.75$ quantile forecasts, |
| Fig. 12 | shows the predicted $\tau = 0.05$ and $\tau = 0.95$ quantiles compared to the test data for the 1st application example, |
| Fig. 13 | shows a plot of training data for the 2nd application example, |
| Figs. 14 and 15 | show an excerpt of the feature matrix X for the 2nd application example, |
| Fig. 16 | shows the predicted $\tau = 0.05$ and $\tau = 0.95$ quantiles compared to the test data for the 2nd application example, |
| Figs. 17 and 18 | show schematically the main steps performed in anomaly detection, |
| Figs. 19a and 19b | show schematically the main steps performed in forecasting a time series of application monitoring data, observability data and data observability data, |
| Fig. 21 | shows the determination of a minimum and a maximum value by two methods taking into account a lower quantile forecast, a median forecast and a higher quantile forecast, |
| Fig. 22 | shows the mapping of multiple evenly distributed random numbers by piecewise linear interpolation into a range determined by a minimum and a maximum value. |

Corresponding reference numerals indicate corresponding parts throughout the several views of the drawings.

Detailed description

Corresponding reference numerals indicate corresponding parts throughout the several views of the drawings.

A first application example shows how training time series data is used to train multiple probabilistic models and how the trained models are able to calculate multiple numerical forecasts predicting the development of the time series in future. The forecasts can be used for i) making decisions in the field of application monitoring and observability of computer environments, such as capacity or resource planning, or can be used for ii) anomaly detection.

The time series of application monitoring and observability data is given by the equations

$$t = [0 \ldots 2100] \tag{1}$$

$$T_1 = 10 \qquad T_2 = 18 \tag{2}$$

$$y = 4 . sin\left(2\pi \frac{t}{T_1}\right) + 6 . sin\left(2\pi \frac{t}{T_2} + \frac{\pi}{12}\right) \tag{3}$$

In order to make the time series more irregular, or in other words, less predictable, normally distributed noise is added to y, where the noise has a mean value of 1. The time series *y* represents e.g. changes in the HDD capacity or CPU load of a computer. The unit of time *t* can be e.g. hours, minutes, or multiples of it.

The code to calculate the time series y in the well-known programming language *Python* is given below:

```
import matplotlib.pyplot as plt
import numpy as np
import pandas as pd
import plotly.graph_objects as go
from scipy.interpolate import interp1d


# random seed for sake of reproducibility
seed = 123
rng = np.random.default_rng(seed=seed)


# number of time steps and time axis
n = 2100
t = np.arange(n)


# example signal consisting of two sine waves with added noise
w1 = 2 * np.pi / 10 # sine wave one with period length 10
w2 = 2 * np.pi / 18 # sine wave two with period length 18


y = (
  + 4 * np.sin(w1 * t)
  + 6 * np.sin(w2 * t + np.radians(30))
  + rng.normal(size = (n, ), scale=1)
)


y_train, y_test = y[:2000], y[2000:]
```

The first 2000 values of the time series are used as training data y_train. The last 100 values of the time series are used as test data y_test.

The training data y_train, the first 500 values of the training data and the last 500 values of the training data are displayed in Figs. 4, 5 and 6, respectively. The first 10 values of the time series vector y rounded to two decimals are given below:

$$y = [2.01, 6.58, 10.7, 10.0, 8.91, 5.17, 0.0124, -2.22, -5.16, -5.67]$$

Having specified the training time series data, the steps for training the probabilistic models used in the application example will be explained next.

In this example a simple linear regressive model

$$\hat{y} = X \cdot \beta^* + \beta_0^* \qquad (4)$$

will be used to predict the time series y. The predicted values of the time series are denoted by $\hat{y}$, contrary to the time series itself y. X denotes a $n \times p$ feature matrix, where each row $x_i$ is one training example and y denotes the time series (also known as target vector) of length n, where each entry $y_i$ corresponds to $x_i$. β is a vector of parameters or weighting factors. Note that the parameter vector $\beta$ and the so-called intercept $\beta_0$ can be combined into one vector $\beta$ by adding a constant column of ones to the feature matrix.

The goal of training the probabilistic models by machine learning is to find the optimal parameters β*, which minimize the overall empirical loss function

$$J^\tau(\beta, \beta_0) = \sum_{i=1}^{n} L^\tau(y_i, x_i \cdot \boldsymbol{\beta}) \qquad (5),$$

where $L^\tau$ is the so-called quantile loss or pinball loss for the $\tau$-th quantile:

$$L^\tau(y_i, \widehat{y_i}) = \begin{cases} \tau(y_i - \hat{y}_i) & if \ y_i - \hat{y}_i \geq 0 \\ (\tau - 1)(y_i - \hat{y}_i) & if \ y_i - \hat{y}_i < 0 \end{cases} \qquad (6)$$

In this application example, the cost function

$$C^\tau(\boldsymbol{\beta}) = \frac{1}{n} J^\tau(\boldsymbol{\beta}) + \lambda_2 ||\boldsymbol{\beta}||_2^2 + \lambda_1 ||\boldsymbol{\beta}||_1 \qquad (7)$$

will be minimized, where $||\boldsymbol{\beta}||_2^2 = \sum_j \boldsymbol{\beta}_j^2$ and $\|\beta\|_1 = \Sigma_j |\beta_j|$ denote the well known $L_2$- and $L_1$-regularization terms.

In the 1st step of model training by machine learning, the feature matrixX is created considering solely autoregressive features. The only other feature is the intercept, which is a constant column on the very righthand side.

In this example, 20 autoregressive features, i.e. n = 20 as defined in Equ. 5, and one intercept value will be used. The name of the feature matrix X in the Python code is y_matrix_df.

```
max_lag = 20
num_rows = y_train.shape[0] - max_lag
y_matrix = np.zeros((num_rows, max_lag))
lags = np.arange(max_lag) + 1

for i, lag in enumerate(lags):
    y_matrix[:, i] = np.roll(y_train, lag)[max_lag:]
y_matrix_df = pd.DataFrame(
    y_matrix,
    columns=[f"y[t-{x}]" for x in (np.arange(max_lag) + 1)],
    index=pd.Series(np.arange(num_rows) + max_lag, name='t'))
# add intercept feature
y_matrix_df["intercept"] = 1
```

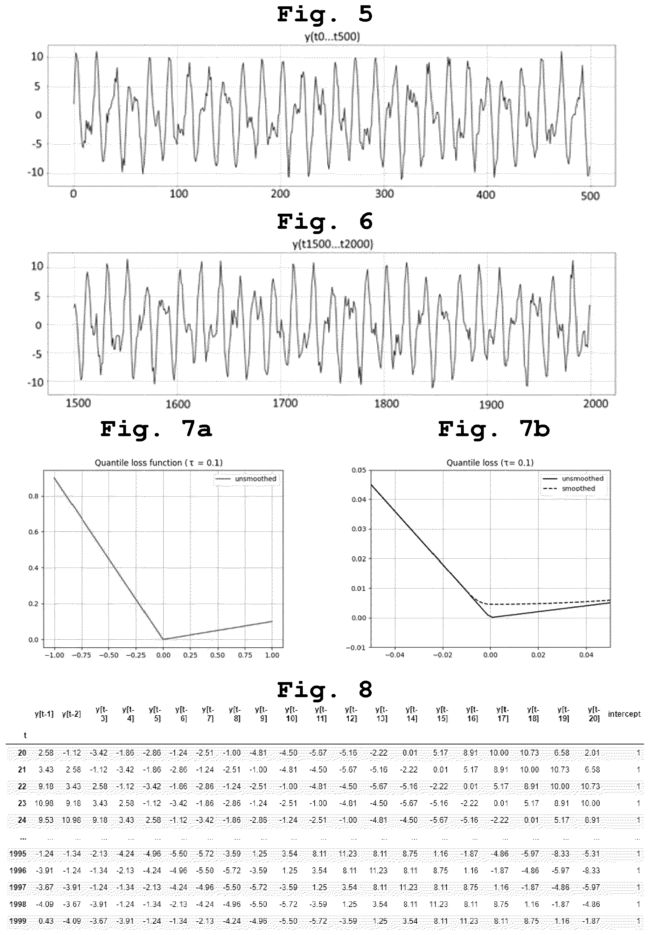

Note that X = y_matrix_df has a dimension of 1980 rows (2000 rows of training data - 20 autoregressive features) and 21 columns (20 autoregressive features plus the intercept). The first five and the last five rows of the feature matrix are shown in Fig. 8.

After having defined the feature matrix X, the optimal values for the autoregressive features β are calculated by a modified Iterative Least Squares (ILS) algorithm. Note that the method presented below does not follow the classical ILS algorithm, since the cost function of Equ. 7 enables $L_2$ and approximate $L_1$ regularization. Since the classical ILS algorithm does not allow regularization, it is unsuitable for many real-world cases since outliers have a strong effect on the feature matrix $\beta$. Here, a modified ILS algorithm is used, which allows both $L_2$ and $L_1$ regularization. This algorithm is called RSILS (Regularized Smoothed Iterative Least Squares).

It is advantageous to use the RSILS algorithm for Quantile Regression for cases with $\geq 1000$ datapoints. The algorithm provides an efficient and fast approximate solution of the regularized optimization problem.

As the quantile loss or pinball loss function given in Equ. 5 is an unsteady function in the region around 0 (see e.g. $\tau = 0.1$ in Fig. 7a), the original quantile loss function is not differentiable at x=0 and hence cannot be optimized with an ILS algorithm. In order to make the quantile loss function differentiable, the quantile loss function is smoothed (see Fig. 7b) in the region around x=0. The same is done for the L1-loss function.

The smoothing is done by introducing the function

$$S_i^{\mathcal{L}1}(\boldsymbol{\beta}; \delta, \lambda_1) = \lambda_1 \begin{cases} -\beta_i & if\ \beta_i \leq -\delta \\ \frac{\beta_i^2}{2\delta} + \frac{\delta}{2} & if -\delta < \beta_i \leq \delta \\ \beta_i & if\ \beta_i > \delta \end{cases} \tag{8}$$

such that an optimized $\beta$ can be determined in an iterative manner by Equ. 9.

$$\boldsymbol{\beta} = \left(X^T W_2 X + \frac{c}{\delta} I_2 + 2\lambda_2 I\right)^{-1} (X^T W_2 y + c X^T W_1 1_n + c I_1 1_n - c I_3 1_n) \tag{9}$$

where X is the feature matrix, c is the area of smoothing, $\delta$ is the area of smoothing for the L1 regularization, and $I_1$, $I_2$, $I_3$ are matrices depending on the current coefficients.

The matrices $I_1$, $I_2$ and $I_3$ are defined as

$$I_1(\delta) = \lambda_1 diag\left(\mathcal{I}_{\beta_i \leq -\delta}\right)$$

$$I_2(\delta) = \lambda_1 diag\left(\mathcal{I}_{-\delta < \beta_i < \delta}\right)$$

$$I_3(\delta) = \lambda_1 diag\left(\mathcal{I}_{\beta_i \geq -\delta}\right) \tag{10}$$

and $W_1$, $W_2$ are arrays depending on the current residuals

$$W_{1,i}(r_i) = \begin{cases} \tau - 1 & r_i \leq -c * \tau \\ \tau & r_i \geq c * (1 - \tau) \\ 0 & otherwise \end{cases} \qquad W_{2,i}(r_i) = \begin{cases} \frac{1-\tau}{\tau} & -c * \tau < r_i \leq 0 \\ \frac{\tau}{1-\tau} & 0 < r_i \leq c * (1 - \tau) \\ 0 & otherwise \end{cases} \tag{11}$$

After defining all this, the application of the RSILS algorithm is quite straightforward, involving the following steps:

1. Find an initial solution $\beta$new
2. Calculate residuals
3. Calculate W1, W2, I1, I2, I3 (see Equ. 10, 11)
4. $\beta$ old = $\beta$new
5. Calculate $\beta$new (see Equ. 9)
6. If AbsMax($\beta$old - $\beta$new) < diff:
return $\beta$new
7. Go back to step 2.

For the sake of simplicity, the optimization of $\beta$ will be demonstrated for one quantile $\tau = 0.25$ only. We choose $c = 4$, $\lambda_2 = 10^{-3}$ and $\lambda_1 = 0$. The tolerance is set to $1 \times 10^{-4}$. The corresponding code in Python is:

```
def quantile_loss(residuals, q):
    return np.mean(np.where(residuals < 0, (q - 1) * residuals, q * residuals))


tau = 0.25
tolerance = 1e-4
max_iter = 30
l2 = 0.001
c = 4

x = y_matrix_df.values
target = y_train[max_lag:]


p = x.shape[1]
n = x.shape[0]


# regularization matrix
L2 = l2 * np.identity(p) * n


# initial solution
beta_new = np.dot(np.linalg.pinv(np.dot(x.T, x) + L2), np.dot(x.T, target))
```

The initial solution (given by the classical solution of the simple "Ridge Regression") for $\beta_{new}$ rounded to three digits is:

$$\beta_{new} = [0.194, 0.1, -0.039, -0.075, -0.11, -0.14, -0.112, -0.061, -0.019, 0.012, 0.011, -0.029, -0.019, -0.047, -0.039, -0.024, 0.074, 0.155, 0.196, 0.203, 0.005]$$

The code for calculating the residuals is

$$residual = target - np.dot(x, beta\_new)$$

```
quantile_loss(residual, tau)
```
and the mean quantile loss is 0.444.

In the next step, W1, W2, 11, I2 and I3 are calculated

$$w1 = np.zeros(n)$$

$$w2 = np.zeros(n)$$

$$mask1 = np.where(residual <= (-c * tau))$$

$$mask2 = np.where(((-c * tau) < residual) \& (residual <= 0))$$

$$mask3 = np.where((0 < residual) \& (residual < (c * (1 - tau))))$$

$$mask4 = np.where(residual >= (c * (1 - tau)))$$

$$w1[mask1] = tau - 1$$

$$w1[mask4] = tau$$

$$w2[mask2] = (1 - tau) / tau$$

$$w2[mask3] = tau / (1 - tau)$$

In step 5, βold is set to βnew.

Step 6 checks whether β is converging. In other words, if AbsMax(βold - βnew) < diff then βnew will be returned, otherwise new values for βnew will be calculated.

As $\beta$ has not yet converged, $\beta_{new}$ is calculated using the formulas given above and utilizing the following code:

```
beta_old = beta_new
```

```
xt_w2 = x.T * w2
inv = np.dot(xt_w2, x) + 2 * c * L2
z1 = c * np.sum(x.T * w1, axis=1)
z = np.dot(xt_w2, target) + z1
beta_new = np.dot(pinv(inv), z)
```

This results in $\beta_{new}$ = [0.197, 0.127, -0.006, -0.098, -0.116, -0.131, -0.105, -0.075, 0.025, -0.014, 0.041, -0.011, -0.06 , -0.05 , -0.012, -0.017, 0.091, 0.14, 0.193, 0.197, -0.772]

In the next step, the quantile loss is checked again:

```
residual = target - np.dot(x, beta_new)
np.mean(np.where(residual < 0, (tau - 1) * residual, tau * residual))
quantile_loss(residual, tau)
```

The mean value of the quantile loss is 0.354.

Next it is checked whether the iteration has already converged

```
np.max(np.abs(beta_new - beta_old))
```

As the result 0.778 is still greater than the tolerance, further iterations are performed until the algorithm has converged. This is done using the following code:

```
iteration = 1

while(True):
    iteration += 1
    print(f"Iteration: {iteration}")

    w1 = np.zeros(n)
    w2 = np.zeros(n)

    mask1 = np.where(residual <= (-c * tau))
    mask2 = np.where(((-c * tau) < residual) & (residual <= 0))
    mask3 = np.where((0 < residual) & (residual < (c * (1 - tau))))
    mask4 = np.where(residual >= (c * (1 - tau)))

    w1[mask1] = tau - 1
    w1[mask4] = tau
    w2[mask2] = (1 - tau) / tau
    w2[mask3] = tau / (1 - tau)
    beta_old = beta_new

    xt_w2 = x.T * w2
    inv = np.dot(xt_w2, x) + 2 * c * L2
    z1 = c * np.sum(x.T * w1, axis=1)
    z = np.dot(xt_w2, target) + z1
    beta_new = np.dot(np.linalg.pinv(inv), z)
    diff = np.max(np.abs(beta_new - beta_old))

    residual = target - np.dot(x, beta_new)

    print(f"Quantile error: { quantile_loss(residual, tau)}")

    if diff < tolerance:
        break
```

After 4 iterations, the algorithm converges and $\beta$ for $\tau = 0.25$ is:

$\beta_{25}$ =[0.195, 0.117, -0.024, -0.088, -0.119, -0.122, -0.088, -0.067, -0.013, 0.007, 0.031, -0.019, -0.029, -0.035, -0.028, -0.024, 0.079, 0.158, 0.195, 0.21, -0.875]

Repeating the above steps for $\tau$ = 0.5 and $\tau$ = 0.75 yields:

$\beta_{50}$ =[0.191, 0.104, -0.044, -0.077, -0.109, -0.141, -0.114, -0.064, -0.016, 0.014, 0.008, -0.031, -0.019, -0.048, -0.04 , -0.023, 0.076, 0.153, 0.194, 0.205, 0.01]

$\beta_{75}$ =[0.207,   0.085,   -0.06,   -0.032,   -0.117,   -0.165,   -0.124,   -0.051,   -0.03,   0.04, -0.004, -0.041, -0.022, -0.056, -0.046, -0.013, 0.073, 0.161, 0.177, 0.195, 0.901]

By performing the above steps, three probabilistic models, namely a 1st model for predicting lower quantile values with $\tau$ = 0.25, a 2nd model for predicting median values with $\tau$ = 0.5, and a 3rd model for predicting higher quantile values with $\tau$ = 0.75 are trained.

Generally, the next forecast value is given by $\hat{y}$ = X. β (see Equ. 4). As we have three different parameter vectors $\beta_{25}$, $\beta_{50}$, $\beta_{75}$ corresponding to $\tau$ = 0.25, $\tau$ = 0.5 and $\tau$ = 0.75, the forecast value $\hat{y}_{q25}$ of the time series for the 25% quantile is given by $\hat{y}_{q25} = X \cdot \beta_{25}$. Likewise $\hat{y}_{q50} = X \cdot \beta_{50}$ and $\hat{y}_{q75} = X \cdot \beta_{75}$. Put differently, we have one model for forecasting the 25% quantile, one for the 50% quantile and another one for the 75% quantile of the time series.

As noted above, these models may be used to calculate forecast values for the 25% quantile, the 50% quantile and the 75% quantile of the predicted time series $\hat{y}_{q25}$, $\hat{y}_{q50}$ and $\hat{y}_{q75}$, respectively.

In Python this is done by the following code:

```
class ProbabilisticRegressionModel():


    def predict_one_step(self, X):
      y_25 = np.dot(X, beta_new_25)
      y_50 = np.dot(X, beta_new_50)
      y_75 = np.dot(X, beta_new_75)
      return (y_25, y_50, y_75)


model = ProbabilisticRegressionModel()


X_start = np.append((np.flip(y_train[-20:])), 1)


forecast_quantiles = model.predict_one_step(X=X_start)
```

The predicted values for $\hat{y}_{q25}$, $\hat{y}_{q50}$ and $\hat{y}_{q75}$ at t = 2000 (i.e. the 2001st value of the time series, since Python arrays start with index 0) are (1.067, 2.058, 3.022). In other words, the times series for calculating a lower quantile forecast, a median forecast, and a higher quantile forecast at t=2000 is defined by taking the last 20 values [0.43, -4.09, -3.67, -3.91, -1.24, -1.34, - 2.13, -4.24, -4.96, -5.50, -5.72, -3.59, 1.25, 3.54, 8.11, 11.23, 8.11, 8.75, 1.16, -1.87] of the time series y, i.e. ($y_{1989}$...$y_{1999}$), in inverse order and adding 1 on the right-hand side of the vector considering the intercept value yields the input features X_start. The time series vector is given also given in the last row of Fig. 8. The input features correspond to the last line of the matrix X. The forecast $\hat{y}_{q25}$ is equivalent to X.iloc[-1]. dot(beta_new_25). In a likewise manner, the forecasts $\hat{y}_{q50}$ and $\hat{y}_{q75}$ can be calculated.

If the anomaly detection shall be based on the 25% and the 75% quantiles of the forecasted time series, the lower threshold is 1.067 and the upper threshold is 3.022. If the received value $y_n$ at time step 2000 is greater than the upper threshold then this value is marked as a potential anormal data point, e.g. an outlier. Likewise, if the received value $y_n$ at time step 2000 is smaller than the lower threshold then this value is marked too.

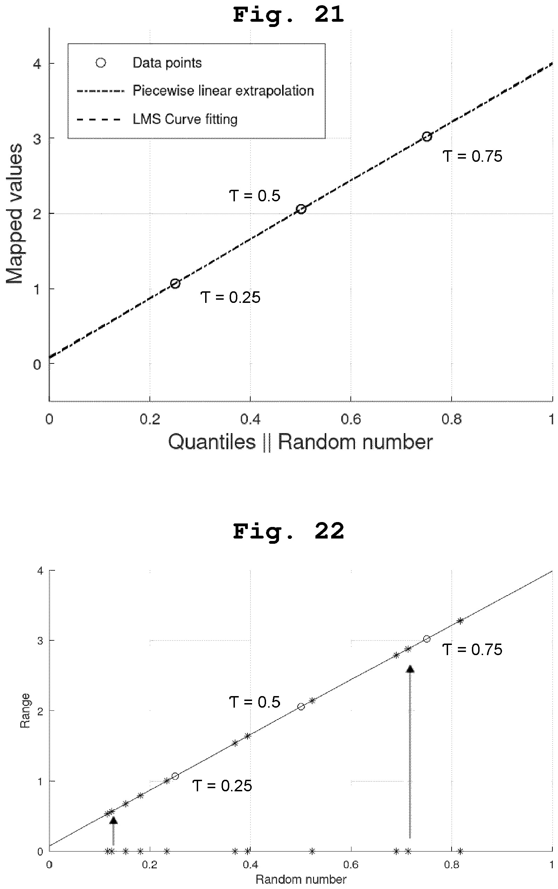

In case the low and high thresholds, say 10% and 90% quantiles, differ from the quantiles used in training the probabilistic models, in a first step the minimum and a maximum values using the lower quantile forecast 1.067, the median forecast 2.058 and the higher quantile forecast 3.022 for the 25%, 50% and the 75% quantiles, respectively, are determined. As shown in Fig. 21, the virtual 0% and 100% threshold are 0.076 and 3.99, respectively, using piecewise linear extrapolation. In this case, the results obtained from LMS curve fitting is similar. In the next step, multiple random numbers evenly distributed between 0 and 1 are generated. For the sake of brevity, only 11 random numbers are generated. These numbers are [0.6895 0.7126 0.2334 0.1232 0.5219 0.1807 0.3942 0.8165 0.3688 0.1512 0.1149]. Mapping these numbers by piecewise linear interpolation to the range between the virtual 0% and 100% quantiles yields [2.7720 2.8621 0.9886 0.5578 2.1168 0.7825 1.6172 3.2684 1.5182 0.6672 0.5253]. The 10% and 90% quantile values are 0.56 and 2.86, respectively (see the arrows in Fig. 22 for these quantiles).

When forecasting time series data, the steps of receiving training time series data, training the probabilistic models and receiving time series data are identical to the method for anomaly detection. Conversely to anomaly detection, not just one time step into the future is predicted but multiple time steps. Fig. 9 shows a plot of 100 forecast values for the quantiles $\hat{y}_{q25}$ and $\hat{y}_{q75}$ compared to the training data.

The accuracy of prediction can be increased further by performing multiple statistical experiments on the forecast values. Although there is no authoritative definition for the term in the art, performing multiple statistical experiments in order to solve complex problems, is sometimes called *random sampling*, or "*Monte Carlo Sampling*". In addition, statistical experiments allow not just the forecasting of certain pre-defined quantiles, i.e. the same quantiles used for training the model, but arbitrary quantiles. This is done by adding the function sample_value to the class ProbabilisticRegression-Model defined above: # from scipy.interpolate import interp1d

```
def sample_value(alpha, quantile_range):
  section_boundaries = [
    alpha[0] - (alpha[1] - alpha[0]),
    alpha[0],
    alpha[1],
    alpha[2],
    alpha[2] + (alpha[2] - alpha[1])]


  s_ti= rng.uniform(low=0, high=1, size=1)


  interpolation = interp1d(quantile_range, section_boundaries)


  return interpolation(s_ti)
```

The code for predicting the 5%, the 50% and the 95% quantiles up to a time horizon of 100 forecasts of the time series $\hat{y}$ is as follows:

```
num_paths = 100
fh = 100
quantiles = (0.05, 0.5, 0.95)


model = ProbabilisticRegressionModel()


num_features = y_matrix_df.shape[1]


# holds generated samples of paths
samples = np.empty(shape=(num_paths, fh))


X_start = np.append((np.flip(y_train[-20:])), 1)


for i in range(num_paths):
  X_next = X_start.copy()
  for j in range(fh):
    # calculating forecasts for the 25%, 50% and 75% quantiles
    forecast_quantiles = model.predict_one_step(X=X_next)
    sample = sample_value(alpha=forecast_quantiles, quantile_range=(0, 0.25, 0.5, 0.75, 1))


    # prepare feature vector for next prediction by

        # filling in the current sample value as last "known point"
        X_next[1: num_features - 1] = X_next[:-2]
        X_next[0] = sample


        samples[i, j] = sample


    forecast = np.quantile(samples, axis=0, q=quantiles)
```

The above code predicts 100 paths (num_paths = 100) up to a prediction horizon of 100 (fh = 100). Fig. 10 shows 10 predicted paths only.

As above, first the forecast values for the 25%, 50% and 75% quantiles are calculated. The function sample_value maps these forecast values to a forecast range and calculates an evenly distributed random value between 0 and 1. The forecast range assumes that the difference between the 50% quantile and the 25% quantile is also the difference between the 25% quantile and the 0% quantile. Likewise, it is assumed that the difference between the 75% quantile and the 50% quantile is also the difference between the 100% quantile and the 75% quantile. The mapping to the segments is as follows:

| | Lower bound | Upper bound | Quantile range |
|---|---|---|---|
| Segment 1 | $y_{t+1}[q_{25}] - (y_{t+1}[q_{50}] - y_{t+1}[q_{25}])$ | $y_{t+1}[q_{25}]$ | < q25 |
| Segment2 | $y_{t+1}[q_{25}]$ | $y_{t+1}[q_{50}]$ | [q25 - q50[ |
| Segment 3 | $y_{t+1}[q_{50}]$ | $y_{t+1}[q_{75}]$ | [q50 - q75[ |
| Segment 4 | $y_{t+1}[q_{75}]$ | $y_{t+1}[q_{75}] + (y_{t+1}[q_{75}] - y_{t+1}[q_{50}])$ | >= q75 |

Fig. 11 shows that based on the forecast values for the 25%, 50% and 75% quantiles $y_{t+1\_q25}$, $y_{t+1\_q50}$, and $y_{t+1\_q75}$ the lower and upper bounds $y_{t+1\_q0}$ and $y_{t+1\_q100}$ can be derived. Note that the distances D2 between $y_{t+1\_q75}$ and $y_{t+1\_q50}$ and D1 between $y_{t+1\_q50}$ and $y_{t+1\_q25}$ do not have to be equal as displayed in Fig. 11. In real-world problems, the distribution is often skewed, meaning that $\Delta1 \neq \Delta2$, e.g. $\Delta1 >> \Delta2$ or $\Delta1 << \Delta2$.

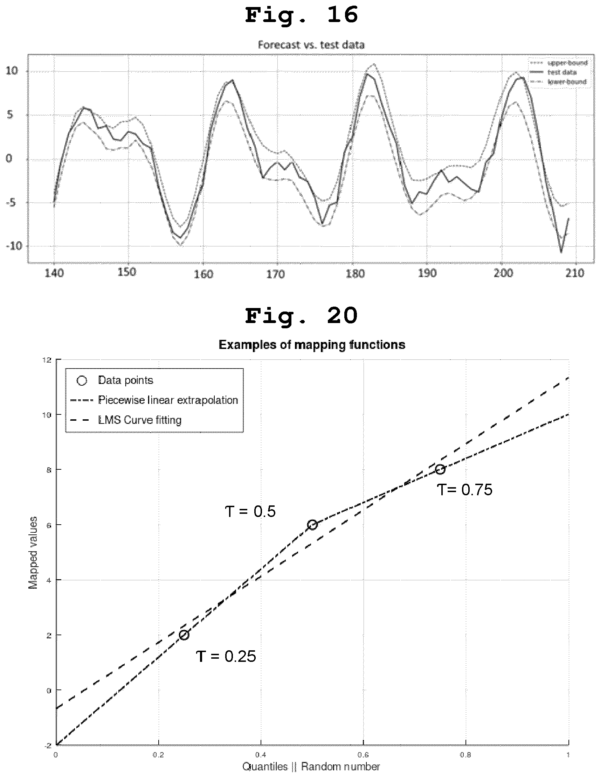

Fig. 20 shows another example of determining the range between the 0% and the 100% quantiles. It is assumed that the lower quantile forecast for $\tau = 0.25$ delivers the value 2, the median forecast delivers the value 6 and the higher quantile forecast for $\tau = 0.75$ delivers the value 8, such that the forecasts are skewed. According to a first strategy using piecewise linear interpolation, the virtual 0% quantile is found to be at -2 and the virtual 100% quantile is found to be at 10. According to another strategy making use of a Least Mean Square (short LMS) curve fit between the datapoints, the virtual 0% quantile is found to be at -0.67 and the virtual 100% quantile is found to be at 11.3. It is noted that not just the range between the minimum value and the maximum value is affected by the choice of mapping function, also the mapping from a random variable between 0 and 1 is affected. Thereby, the mapping function directly affects how a random variable is mapped into the range and therefore the next forecast value. As the next forecast value is appended to the time series affecting, this affects all subsequent forecasts in a path of forecast.

Interpolating the random value to the forecast range yields one result of the statistical experiment. In otherwords, a random value of 0.5 is interpolated to be in the "middle" between $y_{t+1\_q0}$ and $y_{t+1\_q100}$, a random value of 0 is located at the lower bound and a random value of 1 is at the upper bound. Each random value between 0 and 1 mapped into the range between a low threshold and a high threshold represents one statistical experiment.

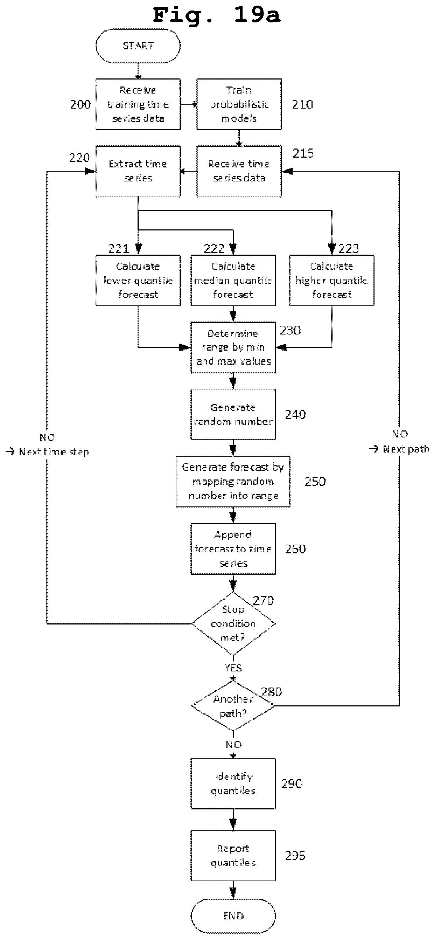

For calculating the forecast for the next time step, two possibilities exist:
According to a first variant of the method shown in Fig. 19a, individual forecast paths are calculated until the end of the prediction horizon, e.g. 100 time steps. After receiving the training time series data set 200, training the at least two probabilistic models 210 (a first model for predicting a lower quantile forecast corresponding to a lower quantile $\tau_{low}$, a second model for the median forecast and a third model for predicting a higher quantile forecast corresponding to a higher quantile $\tau_{high}$, such that $\tau_{high} > \tau_{low}$.) and receiving the actual time series on which the forecasts shall be based 215, the last n subsequent values of the time series up to and including time step N are extracted from the time series, step 220. n is the order of the model, e.g. considering 20 autoregressive features. Mathematically, the time series is a vector x of length n. After this, at least a lower and a higher quantile forecast for time step N+1 are calculated in steps 221 and 223. Step 222 shows the optional calculation of a median quantile forecast. After having calculated the lower and higher quantile forecasts by multiplying the time series vector x with the respective parameter vector $\beta$ for the quantile, the minimum value and the maximum value at time step N+1 are determined in step 230 taking into account the lower and higher quantile forecasts. After this, in step 240 one random number evenly distributed between 0 and 1 is generated and mapped into the range defined by the minimum and maximum values, step 250. The value of the random number after mapping is the forecast value at time step N+1. In order to calculate the forecast value at time step N+2, the forecast value at time step N+1 is appended to the time series, step 260, and the last n values of the time series are extracted, hereby forming the new time series vector (step 220). These steps are repeated until the prediction horizon is reached in step 270. By doing so, one forecast path is calculated. This procedure is repeated for multiple, e.g. 10 or 100, forecast paths. The number of computed path is checked by condition 280. After this, the distribution of the variable at the various time steps can be evaluated and quantile values can be identified, step 290. In step 295, the identified quantile values are reported to the method customer.

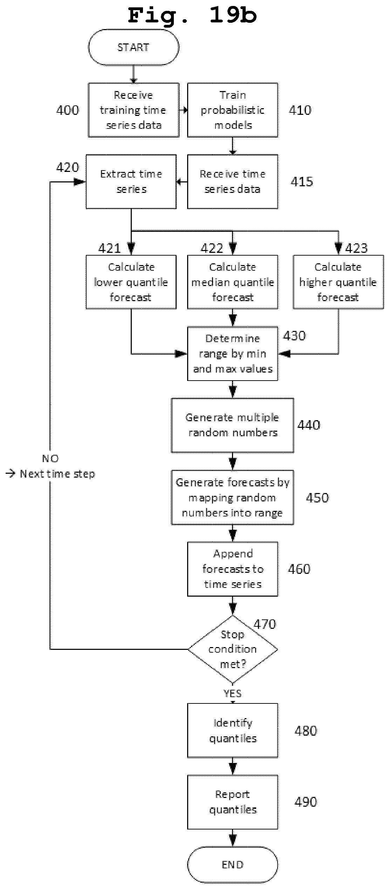

The second first variant shown in Fig. 19b of the method is similar to the first variant however, not just one evenly distributed random variable is generated but multiple random variables, step 440. Before calculating the lower and higher quantile forecasts for time step N+1, the last n subsequent values up to time step N are extracted from the time series, step 420. After having calculated the lower and higher quantile forecasts by multiplying the time series vector x with the respective parameter vector $\beta$ for the respective quantile, the minimum value and the maximum value at time step N+1 are determined taking into account the lower and higher quantile forecasts and possibly a median forecast, see step 430. After this, multiple random numbers evenly distributed between 0 and 1 are generated and mapped into the range defined by the minimum value and the maximum value, step 450. Note that each random number mapped into the range constitutes one forecast of the time series at time step N+1. In order to calculate the forecasts at time step N+2, each forecast at time step N+1 is appended to the time series, step 460. If e.g., 100 forecast values are generated, 100 time series exist. In step 420, the last n values of the time series are extracted, thereby forming a set of new time series vectors. These steps are repeated until the prediction horizon is reached in step 470. It is noted that the quantiles can be identified after meeting the prediction horizon / step condition, see step 480, or already after generating the multiple forecast values for the respective time step in step 450. In any case, the distribution of the variable at the various time steps is evaluated and quantile values are identified. In step 490, the quantile values are reported to the method customer.

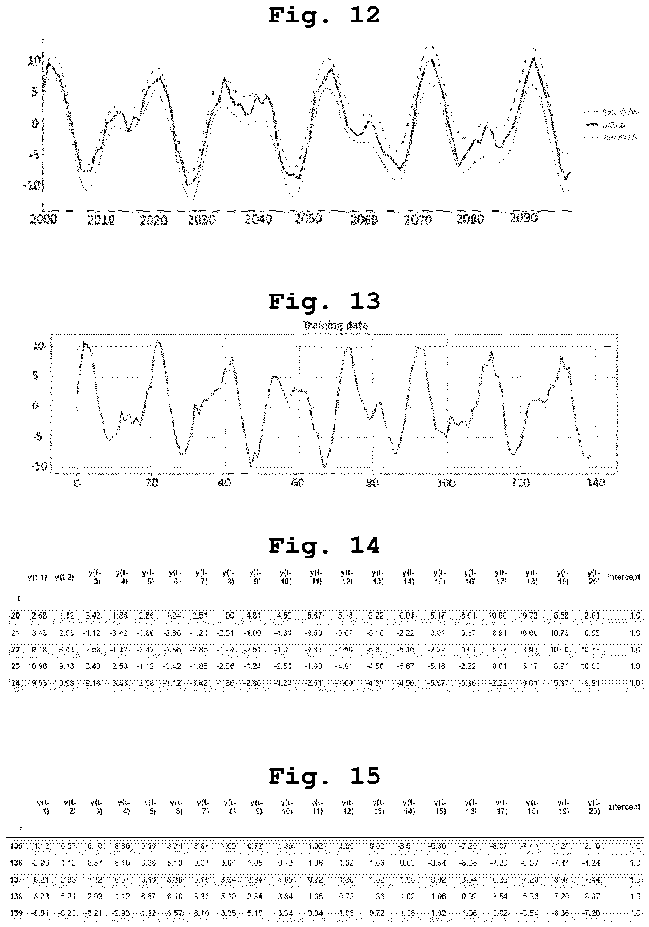

For each time step, 100 statistical experiments are conducted and the 5% and the 95% quantile values are determined from the results of the statistical experiments. These quantile values define the upper and the lower bound of the predictions, respectively. Fig. 12 shows the upper and lower bounds for the predictions as well as the training data (labelled "actual"). One can see that the forecast is perfectly accurate since the training data is always within the predicted bandwidth between the 5% and the 95% quantiles of the forecast.

In a second application example it will be demonstrated how a modified algorithm for solving the optimization problem of Equ. 7 can be used to predict a time series of application monitoring and observability data.

The historical time series is identical to the time series used in the first application example. However, the length of the training data is 140 and the length of the test data is 70. One time step can be e.g. one second, one minute, one hour, one day, or multiples of it.

As in the first example, normally distributed noise is added to y, where the noise has a mean value of 1. To increase the readability of the time series, the y values are again rounded to 2 decimals.

The code for defining the training and test data in Python is:

```
import matplotlib.pyplot as pit
import numpy as np
import pandas as pd
from time import time as tick
from scipy.interpolate import interp1d
seed = 123 # random seed used for reproducibility of results
rng = np.random.default_rng(seed=seed)
# number of time steps and time axis
n = 210
t = np.arange(n)
# example signal consisting of two sine waves with added noise
```

$$w1 = 2 * np.pi / 10 \text{ \# angular velocity omega 1}$$

$$w2 = 2 * np.pi / 18 \text{ \# angular velocity omega 2}$$

$$y = (+ 4 * np.sin(w1 * t)$$
$$+ 6 * np.sin(w2 * t + np.radians(30))$$
$$+ 1 * rng.normal(size = (n,), scale=1))$$

$$n\_train = 2 * n // 3$$

$$y\_train, y\_test = y[:n\_train], y[n\_train:]$$

The first 10 values of y are [2.01, 6.58, 10.7, 10.0, 8.91, 5.17, 0.0124, -2.22, -5.16, -5.67]. The training data y_train is shown in Fig. 13.

Using the same Python code as above yields a feature matrix X with 120 rows (140 training data points - 20 lags considered) and 21 columns (20 lags + 1 intercept). The first 5 rows of X are shown in Fig. 14; the last 5 rows of X are shown in Fig. 15.

The second application example uses a Coordinate Descent (CD) algorithm for Quantile Regression, which is particularly advantageous for cases with fewer datapoints (e.g. <1000). The coordinate descent algorithm provides an exact solution to the regularized quantile regression problem.

The general idea of the coordinate descent algorithm is to optimize a given cost function like $C^\tau(\beta)$ (see Equ. 7) of a $p$ dimensional argument $\beta = (\beta_1, \beta_2, \ldots, \beta_p)$ by optimizing for one parameter $\beta_j$ at coordinate $j$ ($j$ typically chosen randomly) while keeping all the other parameters $\beta_l$, $l \neq j$ fixed. Hence, the optimization problem is reduced to a series of univariate optimization problems and has in general a runtime complexity of $O(m \cdot p \cdot U(n))$ where $U(n)$ is the runtime complexity of the univariate optimization problem, and m being the number of iterations through the number of variables p, which is typically proportional to $p$ itself.

This boils down to find the minimum of $C^\tau(\beta_1, \ldots, \beta_j, \ldots, \beta_p)$ with respect to $\beta_j$ at coordinate $j = 1, \ldots, p$. Hence $C^\tau(\beta_1, \ldots, \beta_j, \ldots, \beta_p)$ can be written as a function of $\beta$ (dropping the subscript $j$ from $\beta_j$ and superscript $\tau$ from $J$ and C for brevity) as

$$J(\beta) = \sum_{i=1}^{n} L^\tau(y_i, x_{ij}\beta + B_{-j})$$

$$C(\beta) = \frac{1}{n} J(\beta) + \lambda_2\beta^2 + \lambda_1|\beta| + R_{-j}$$

$$(12),$$

where $B_{-j} = \Sigma_{l \neq j} x_{il}\beta_l$ and $R_{-j}$ are constants not depending on $\beta$ when minimizing $C(\beta)$. The additive constant $R_{-j}$ stemming from the regularization terms does not depend on $\beta$ can and will be assumed to be 0. Also the point loss function $L^\tau$ becomes a function of $\beta$ and can be rewritten (omitting superscript $\tau$ for brevity and adding subscript i to denote the dependency on the data point $i$) as $L_i(\beta) = L^\tau(r_{ij}, x_{ij}\beta)$ with the residuals $r_{ij} = y_i - \hat{y} + x_{ij}\beta$. So we get for the univariate loss function to be minimized

$$C(\beta) = \frac{1}{n} J(\beta) + \lambda_1|\beta| + \lambda_2\beta^2 = \frac{1}{n}\sum_{i=1}^{n} L_i(\beta) + \lambda_1|\beta| + \lambda_2\beta^2 = C_1(\beta) + \lambda_2\beta^2$$

$$(13)$$

It can be seen that $L_i(\beta) \geq 0$ for all values of $\beta$ and $L_i(k_i) = 0$ for the knot $k_i = \dfrac{r_{ij}}{x_{ij}}$. From this observation it is easy to see that $C(\beta)$ is the sum of $n + 2$ non-negative and convex functions: $n$ piece-wise linear terms $L_i(\beta)$, a quadratic term $\lambda_2\beta^2$ and the piece-wise linear term $\lambda_1|\beta|$ with its discontinuity knot $k_0 = 0$. Hence, $C(\beta)$ is also a non-negative and convex function with discontinuities at the knots $k_i$, $i = 0, \ldots, n$. Furthermore the function $C_{1(\beta)} = \frac{1}{n}\sum_{i=1}^{n} L_i(\beta) + \lambda_1|\beta|$ is linear between two consecutive knots $k_{i_1} < k_{i_2}$. Hence, the solution $\beta_1^*$ which minimizes $C_1(\beta)$ is simple to compute $\beta_1^* = \mathrm{argmin}_{k_i\,:\,i=0,\ldots,n}\ C_1(k_i)$. Such a naive implementation would require $O(n)$ steps to evaluate $C_1(k_i)$ rendering the computation of $\beta$l very inefficient with a runtime complexity of $O(n^2)$, which would yield an unacceptable overall runtime complexity for CD of $O(p^2 n^2)$.

However, by sorting the knots $k_i$ such that $k_0 < k_1 < \cdots < k_{n-1} < k_n$ and applying some algebra one can derive a constant time update equation $C_1(k_{i+1}) = C_1(k_i) + (k_{i+1} - k_i) \cdot S_{i+1}$ where $S_{i+1}$ is the slope of $C_1(\cdot)$ between $k_i$ and $k_{i+1}$.

In the following set of update equations $x_{(i)j}$ and $r_{(i)j}$ denote the values from which the knot $k_i = \dfrac{r_{(i)j}}{x_{(i)j}}$ has been computed.

The initial value of cost function at knot $k_0$ is

$$C_1(k_0) = \frac{1}{n}\sum_{i=1}^{n} L^\tau(r_{ij}, x_{ij}k_0) + \lambda_1|k_0| \qquad\qquad (14)$$

The left slope of $C_1(k_i)$ is

$$a_i = \frac{1}{n} \begin{cases} -\tau x_{(i)j} & \text{if } x_{(i)j} \geq 0 \\ (1 - \tau) x_{(i)j} & \text{if } x_{(i)j} < 0 \end{cases}$$

or

$a_i = -\lambda_1$ if $k_i$ originates from the L1-regularization term $\lambda_1 |\beta|$.

The right slope of $C_1(k_i)$ is

$$b_i = \frac{1}{n} \begin{cases} (1 - \tau) x_{(i)j} & \text{if } x_{(i)j} \geq 0 \\ \tau x_{(i)j} & \text{if } x_{(i)j} < 0 \end{cases} \quad or \qquad (15)$$

$b_i = \lambda_1$ if $k_i$ originated from the L1- regularization term $\lambda_1 |\beta|$.

Slope left of $S_0 = \sum_{i=0}^{n} a_i$

Computation to get right slope between $k_i$ and $k_{i+1}$ yields

$$S_{i+1} = S_i + b_i - a_i \qquad (16)$$

Finally, the update for $C_1$ is:

$$C_1(k_{i+1}) = C_1(k_i) + (k_{i+1} - k_i) \cdot S_{i+1} \qquad (17)$$

With the help of these equations of $\beta_1^*$ can be computed efficiently in $O(n \log n)$ time yielding an overall time complexity of CD of $O(p^2 n \log n)$, which is now suited for our needs.

The minimizer $\beta^*$ of $C(\beta) = C_1(\beta) + \lambda_2 \beta^2$ in the case of $\lambda_2 > 0$ must not be exactly at one of the knots $k_i$ but hast to be in a closed interval $[k_l, k_{l+1}]$ for which the right slope of $C(\cdot)$ at $k_l$ is negative and the left slope of $C(\cdot)$ at $k_{l+1}$ is positive (this is the definition of how to bracket a minimum of a function). Hence, for $\lambda_2 > 0$ one just has to search for $l$ such that the above conditions are fulfilled, check if either $C(k_l)$ or $C(k_{l+1})$ is the minimum and if not solve the equation

$\frac{\partial C(\beta)}{\partial \beta} = 0$ (for which an analytic solution exists) in the interval $[k_l, k_{l+1}]$. Hence, also in the case $\lambda_2 > 0$ this approach yields an exact algorithm to solve the regularized univariate quantile regression problem with a runtime complexity of $O(n \log n)$.

The mathematics presented above will be applied to our 2nd application example. The calculation is done for $\tau = 0.25$ only, $\lambda_2 = 0.001$ and $\lambda_1 = 0.1$. We use a convergence tolerance of 0.001.

The coordinate descent example starts with an initial solution of $\beta = (0,0, ...., 0)$ and then applies the above-described steps until convergence has been reached. To application example can be reproduced by the following three Python functions:

```python
import numpy as np
from scipy.optimize import fmin
from scipy import interpolate


def quantile_loss(residuals, tau):
    return np.sum(np.where(residuals < 0, (tau - 1) * residuals, tau * residuals)) / len(residuals)


def univariate_quantile_regression(x, r, tau, lambda1, lambda2):
    # compute knots
    k = r / x
    # sort knots and x and the residuals r in the same order
    order = np.argsort(k)
    k = k[order]
    r = r[order]
    x = x[order]
    # compute left slopes
    a = np.where(x >= 0, -tau * x, (1 - tau) * x) / len(x)
    # compute right slopes
```

```
    b = np.where(x >= 0, (1 - tau) * x, -tau * x) / len(x)
    # add the additional knot stemming from the L1 regularization
    i = np.searchsorted(k, 0.0)
    k = np.insert(k, i, 0.0)
    a = np.insert(a, i, -lambda1)
    b = np.insert(b, i, +lambda1)
    # compute the cost C1 and the slope S incrementally
    C1 = np.zeros(len(k))
    C1[0] = quantile_loss(r - x * k[0], tau) + lambda1 * np.abs(k[0])
    S = np.sum(a)
    for i in range(len(k)-1):
        S = S + b[i] - a[i]
        C1[i+1] = C1[i] + (k[i+1] - k[i]) * S
    # turn C1 into a function
    C1interp = interpolate.interp1d(k, C1, kind='linear', fill_value='extrapolate')
    # create function which includes the L2 regularization term
    def C(beta):
        return C1interp(beta) + lambda2 * beta**2
    # find the minimum of the function C
    # In an efficient read world implementation this is done as describe in the text
    # but for demonstration purposes the explicit check and fmin also does the trick.
    if C(-1e-9) > C(0) and C(0) < C(+1e-9):
        beta_star = 0
    else:
        beta_star = float(fmin(C, np.mean(k), disp=0, xtol=1e-9, ftol=1e-9))

    return beta_star


def coordinate_descent_quantile_regression(X, y, tau=0.25, lambda1=0.2, lambda2=0.01,
tolerance=0.0001):
    # the dimensions of the QR design matrix
    n, p = X.shape
    # the initial solution
    beta = np.zeros(p)
    # start iteration
    iteration = 1
```

```
while True:
    # save current beta to compare against
    beta_old = beta.copy()
    # iterate over all variables of the matrix X
    for j in range(p):
        # target to be fitted by univariate quantile regression
        target = y - X @ beta + X[:,j] * beta[j]
        # perform univariate quantile regression
        beta[j] = univariate_quantile_regression(X[:, j], target, tau, lambda1, lambda2)
    # difference of new solution to previous solution
    delta = np.max(np.abs(beta - beta_old))
    # the L1 and L2 norm of beta
    l1_norm = np.sum(np.abs(beta))
    l2_norm = np.sum(beta**2)
    # the quantile loss of the current solution
    loss = quantile_loss(y - X @ beta, tau)
    # the cost of the solution
    cost = loss + lambda1 * l1_norm + lambda2 * l2_norm
    # stop if the change in beta is smaller than the tolerance
    if delta < tolerance:
        return beta

    # next iteration
    iteration += 1
```

During the first iteration the target for $j = 0$ equals the timeseries y itself as all values of $\beta$ are 0.0. Hence, the univariate quantile regression gets called with the following arguments:

$$x = X[:,0] = [2.58, 3.43, 9.18, 11.0, 9.53, 6.11, 0.896, -2.11, -5.73, -8.01, ...]$$

$$r = target = [3.43, 9.18, 11.0, 9.53, 6.11, 0.896, -2.11, -5.73, -8.01, -7.98, ...]$$

This leads to a this set of sorted knots $k_i$, left slopes $a_i$, right slopes $b_i$ and costs $C_1(k_i)$:

$$k=[-11.4, -10.7, -5.73, -4.5, -3.15, -3.05, -3.0, -2.62, -2.42, -2.36, ...]$$

$$a=[-0.000719, -0.000716, -0.00132, -0.00388, -0.000905, -0.00869, ...]$$

$$b=[0.00216, 0.00215, 0.00397, 0.00129, 0.00271, 0.0029, 0.00261, 0.00697, ...]$$

$$C1=[27.8, 26.2, 14.9, 12.1, 9.11, 8.88, 8.77, 7.94, 7.5, 7.35, ...]$$

where the minimum value of $C(\beta^*) = 1.15$ is attained for $\beta^* = 0.883$ after the first application of the univariate quantile regression algorithm.

Then for $j = 1$ the situation has already changed as the target is not equal to $y$ anymore as $\beta_0 = 0.883$. In particular for iteration j = 1 the univariate quantile regression gets called with the following arguments:

$$x = X[:,1] = [-1.12, 2.58, 3.43, 9.18, 11.0, 9.53, 6.11, 0.896, -2.11, -5.73, ...]$$

$$r = target = [1.15, 6.15, 2.88, -0.167, -2.3, -4.49, -2.9, -3.87, -2.95, -0.917,...]$$

which in turn leads to the following sorted knots $k_i$, left slopes $a_i$, right slopes $b_i$ and costs $C_1(k_i)$:

$$k=[-17.1, -7.91, -5.97, -4.32, -3.93, -3.54, -3.26, -2.98, -2.92, -2.42, ...]$$

$$a=[-0.000343, -0.00311, -0.00132, -0.00187, -0.00388, -0.00783, -0.00232, ...]$$

$$b=[0.00103, 0.00104, 0.00397, 0.0056, 0.00129, 0.00261, 0.00697, 0.00215, ...]$$

$$C1=[37.6, 17.3, 13.0, 9.33, 8.47, 7.63, 7.0, 6.4, 6.26, 5.18, ...]$$

where the minimum value of $C(\beta^*) = 1.024$ is attained for $\beta^* = -0.135$. Hence, $\beta_1 = -0.135$ after the second application of the univariate quantile regression algorithm in iteration 1.

After the univariate quantile regression has been executed for each $j = 0, ... , 20$ in iteration 1, $\beta$ has assumed the following value:

$$\beta = [0.883, -0.135, -0.177, -0.122, -0.0741, -0.0525, -0.0912, -0.0375, -0.0883, -0.129, -0.0942, -0.107, -0.0541, -0.0633, -0.035, -0.00043, -0.011, 0.0, 0.0, -0.0103, -0.461]$$

For this value of $\beta$ we observe delta = 0.883 a quantile loss of 0.506 and costs of $C(\beta) = 0.769$, an L1 norm of $\beta$ of $\sum_{j=0}^{20} |\beta_j| = 2.62$ and an L2 norm of 1.13.

After another 21 executions of the univariate quantile regression at the end of iteration 2 we get:

$$\beta = [0.808, -0.135, -0.223, -0.198, -0.0962, -0.0596, -0.0912, -0.0174, -0.0768, -0.114, -0.0865, -0.138, -0.061, -0.0746, -0.039, -0.00043, -0.0104, 0.0145, 0.0187, 0.00966, -0.353]$$

For this value of $\beta$ we observe delta = 0.107 a quantile loss of 0.426 and costs of $C(\beta) = 0.689$, an L1-norm of 2.63, and an L2-norm of 0.964. Note how the loss, the costs and delta have been reduced during the second iteration. The following table shows how these quantities evolve as iteration after iteration is executed until delta < 0.001:

| iter | loss | L1 | L2 | cost | $n_z$ | delta | beta |
|------|------|------|-------|-------|---|--------|------|
| 1 | 0.506 | 2.62 | 1.13 | 0.769 | 2 | 0.883 | [0.883, -0.135, -0.177, -0.122, -0.0741, ...] |
| 2 | 0.426 | 2.63 | 0.964 | 0.689 | 0 | 0.107 | [0.808, -0.135, -0.223, -0.198, -0.0962, ...] |
| 3 | 0.414 | 2.46 | 0.922 | 0.661 | 1 | 0.0889 | [0.821, -0.0801, -0.232, -0.228, -0.0964, ...] |
| 4 | 0.403 | 2.3 | 0.862 | 0.634 | 2 | 0.0604 | [0.784, -0.0197, -0.228, -0.23, -0.0833, ...] |
| 5 | 0.384 | 2.27 | 0.85 | 0.611 | 2 | 0.0986 | [0.74, 0.00855, -0.213, -0.231, -0.0452, ...] |

| | | | | | | | |
|---|---|---|---|---|---|---|---|
| 6 | 0.378 | 2.27 | 0.842 | 0.605 | 2 | 0.0222 | [0.729, 0.0104, -0.191, -0.242, -0.0409, ...] |
| 7 | 0.378 | 2.16 | 0.719 | 0.595 | 2 | 0.112 | [0.692, 0.0133, -0.172, -0.268, -0.0409, ...] |
| 8 | 0.367 | 2.19 | 0.73 | 0.587 | 2 | 0.0386 | [0.678, 0.0249, -0.161, -0.283, -0.0391, ...] |
| 9 | 0.359 | 2.2 | 0.731 | 0.58 | 4 | 0.0394 | [0.655, 0.0428, -0.153, -0.29, -0.0391, ...] |
| 10 | 0.355 | 2.18 | 0.71 | 0.573 | 4 | 0.0244 | [0.637, 0.0519, -0.134, -0.29, -0.0383, ...] |
| 11 | 0.35 | 2.15 | 0.688 | 0.566 | 3 | 0.0262 | [0.617, 0.0558, -0.113, -0.296, -0.0383, ...] |
| 12 | 0.347 | 2.15 | 0.671 | 0.562 | 4 | 0.0271 | [0.597, 0.073, -0.111, -0.296, -0.0383, ...] |
| 13 | 0.342 | 2.14 | 0.654 | 0.557 | 4 | 0.0221 | [0.575, 0.0854, -0.0981, -0.304, -0.0383, ...] |
| 14 | 0.339 | 2.13 | 0.651 | 0.553 | 5 | 0.0188 | [0.559, 0.0908, -0.0793, -0.314, -0.0383, ...] |
| 15 | 0.335 | 2.13 | 0.65 | 0.549 | 5 | 0.0162 | [0.543, 0.0951, -0.0666, -0.322, -0.0416, ...] |
| 16 | 0.333 | 2.13 | 0.653 | 0.547 | 5 | 0.0134 | [0.533, 0.0963, -0.0533, -0.331, -0.0431, ...] |
| 17 | 0.332 | 2.11 | 0.649 | 0.544 | 5 | 0.00761 | [0.528, 0.0974, -0.0456, -0.331, -0.0433, ...] |
| 18 | 0.33 | 2.11 | 0.662 | 0.542 | 5 | 0.0186 | [0.523, 0.0991, -0.0374, -0.332, -0.0433, ...] |
| 19 | 0.33 | 2.09 | 0.651 | 0.54 | 5 | 0.00906 | [0.516, 0.1, -0.0283, -0.332, -0.0433, ...] |
| 20 | 0.33 | 2.09 | 0.646 | 0.539 | 5 | 0.00378 | [0.512, 0.103, -0.0269, -0.332, -0.0426, ...] |
| 21 | 0.329 | 2.09 | 0.64 | 0.538 | 5 | 0.0067 | [0.505, 0.108, -0.0268, -0.332, -0.0423, ...] |
| 22 | 0.328 | 2.09 | 0.634 | 0.537 | 5 | 0.00833 | [0.497, 0.114, -0.0264, -0.332, -0.0427, ...] |
| 23 | 0.327 | 2.09 | 0.624 | 0.536 | 5 | 0.0101 | [0.487, 0.122, -0.0262, -0.332, -0.0413, ...] |
| 24 | 0.326 | 2.09 | 0.62 | 0.535 | 5 | 0.00541 | [0.481, 0.125, -0.0262, -0.332, -0.0413, ...] |
| 25 | 0.325 | 2.09 | 0.615 | 0.534 | 5 | 0.00692 | [0.475, 0.13, -0.0262, -0.332, -0.0402, ...] |
| 26 | 0.324 | 2.09 | 0.611 | 0.534 | 5 | 0.00509 | [0.469, 0.134, -0.0262, -0.332, -0.0402, ...] |
| 27 | 0.324 | 2.09 | 0.609 | 0.533 | 5 | 0.00317 | [0.466, 0.136, -0.0257, -0.332, -0.0399, ...] |
| 28 | 0.324 | 2.08 | 0.607 | 0.533 | 5 | 0.00252 | [0.464, 0.138, -0.0253, -0.332, -0.0398, ...] |
| 29 | 0.324 | 2.08 | 0.605 | 0.533 | 5 | 0.00198 | [0.462, 0.139, -0.0249, -0.332, -0.0396, ...] |
| 30 | 0.324 | 2.08 | 0.604 | 0.532 | 5 | 0.00158 | [0.46, 0.14, -0.0244, -0.332, -0.0396, ...] |
| 31 | 0.323 | 2.08 | 0.603 | 0.532 | 5 | 0.00126 | [0.459, 0.141, -0.0239, -0.332, -0.0395, ...] |
| 32 | 0.323 | 2.08 | 0.602 | 0.532 | 5 | 0.00107 | [0.458, 0.142, -0.0234, -0.332, -0.0395, ...] |
| 33 | 0.323 | 2.08 | 0.602 | 0.532 | 6 | 0.000779 | [0.457, 0.142, -0.0227, -0.332, -0.0394, ...] |

After these 33 iterations the final solution for $\beta$ by CD is:

$$\beta =[0.457, 0.142, -0.0227, -0.332, -0.0394, -0.0592, -0.0822, \mathbf{0.0}, -0.00299, -0.026, \mathbf{0.0}, -0.103,$$
$$\mathbf{0.0}, \mathbf{0.0}, -0.0138, \mathbf{0.0}, \mathbf{0.0}, 0.186, 0.0503, 0.132, -0.429]$$

Note that with the CD algorithm a quantile loss of 0.323 has been achieved which is similar as for RSILS algorithm. However, the main difference is that we are able to correctly compute an L1 and L2 regularized solution. This can be seen by the fact that 6 out of the 21 regression parameters are exactly zero (in contrast to RSILS where all 21 parameters are non-zero).

Using the three functions for the CD algorithm above, the optimized parameter vector $\beta_{q25}$ for the 25% quantile $\tau = 0.25$ can be calculated by the following Python code:

beta_q25 = coordinate_descent_quantile_regression(X_train, y_train[num_lags:], tau=0.25, lambda1=0.1, lambda2=0.001, tolerance=0.001)

In an analogue manner, the optimized parameter vectors $\beta_{q50}$, and $\beta_{q75}$ for the 50% and 75% quantiles can be calculated.

The resulting optimized parameter vectors

$$\beta_{q25}=[0.457, 0.142, -0.0227, -0.332, -0.0394, -0.0592, -0.0822, 0.0, -0.00299, -0.026, 0.0, -$$
$$0.103, 0.0, 0.0, -0.0138, 0.0, 0.0, 0.186, 0.0503, 0.132, -0.429],$$

$$\beta_{q50}=[0.498, 0.0952, -0.0043, -0.236, -0.0793, -0.038, -0.0833, 0.0, 0.0, 0.0, 0.0, -0.102, 0.0,$$
$$0.0, -0.000822, 0.0, 0.0, 0.172, 0.154, 0.0284, 0.0], \text{ and}$$

$$\beta_{q75}=[0.501, 0.0944, 0.0, -0.183, -0.112, -0.0353, -0.0462, 0.0, 0.0, 0.0, 0.0, -0.0466, 0.0, 0.0,$$
$$0.0, 0.0, 0.0, 0.23, 0.151, 0.0484, 0.423]$$

can be used to predict one or more 25%, 50% and 75% quantile values of the time series $\hat{y}_{q25}$, $\hat{y}_{q50}$, and $\hat{y}_{q75}$, or can be used to perform statistical experiments on the development of the time series in future.

The parameter vectors $\beta$ for the 25%, 50% and 75% quantile values of the forecast time series- as in the case of the RSILS algorithm - can be used both for anomaly detection and to forecast multiple values of the time series $\hat{y}$ in future. Fig. 16 shows that even with a very few training data points, the test data is contained well within the 5% and the 95% quantiles predicted by random sampling 100 values for each predicted time step in the future.

Although the code for re-working the above application examples was run on Python 3.11, the claimed methods or algorithms are neither limited to Python, nor to the number or level of quantiles used in the application examples. Furthermore, the number of paths and the prediction horizon can be adapted freely. Finally, the above examples consider only autoregressive features. Instead or in addition to autoregressive features, date and time features as well as seasonal features can be considered in the feature matrix. As the addition of such features is well known in the art, methods involving these features shall be covered by the disclosure.

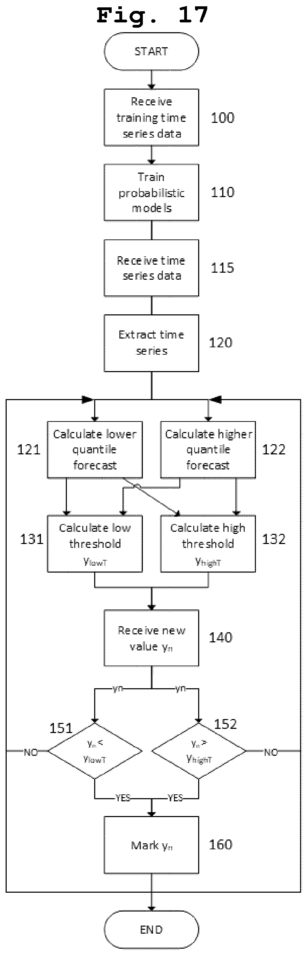

The main steps performed in anomaly detection are shown in Fig. 17. After having received training time series data 100, at least two probabilistic models, typically three probabilistic models, are trained 110. A first model can predict a lower quantile value corresponding to a lower quantile $\tau_{low}$ of the time series and a second model can predict a higher quantile value corresponding to a higher quantile $\tau_{high}$ of the time series, such that $\tau_{high} > \tau_{low}$. After receiving actual time series data 115 and extracting n, e.g. 20, previous values 120, at least a lower quantile forecast 121 and a higher quantile forecast 122 are calculated. Based on these forecasts and possibly on other data, a low threshold value and a high threshold value are calculated in steps 131, 132. After receiving a time value $y_n$ for time step n 140, this value is compared to the lower and higher threshold values 151, 152. If $y_n$ is outside of the range defined by the threshold values, $y_n$ is marked 160 as a potential anormal time value, e.g. an outlier. After performing the comparison and potentially after marking $y_n$, the next lower and higher quantiles are calculated considering $y_n$.

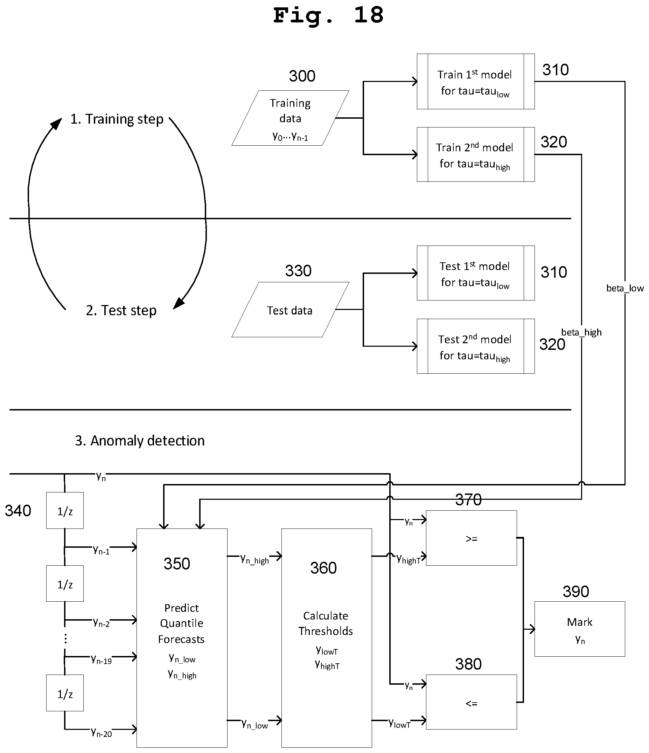

The steps performed in anomaly detection are also shown in Fig. 18. In a training step, training data 300 is used to train a 1st model 310 being able to predict a low quantile forecast corresponding to $\tau_{low}$ and a 2nd model 320 being able to predict a high quantile forecast corresponding to $\tau_{high}$. In an optional subsequent step, test data 330 is used to verify the models 310, 320. The training and testing steps can be iterated several times until the models 310, 320 predict the lower and higher threshold values of the time series sufficiently well. The result of the training are optimized parameter vectors beta_low and beta_high for the models 310, 320. The anomaly detection is schematically displayed in the third step. Here time series data is received and the last n values of the time series are extracted. The blocks 340 represent time lag blocks 1/z, where z represents the z transformation. Explained in simple terms, $y_n \frac{1}{z} = y_{n-1}$. Block 350 predicts the low and high quantile forecasts by considering $y_{n-1} \ldots y_{n-20}$ (n = 20 time lags assumed) and the parameter vectors $\beta_{low}$ and $\beta_{high}$. The upper and lower threshold values are calculated by block 360 in functional relation to the low and high quantile forecasts. The blocks 370 and 380 compare $y_n$ to the upper (block 370) and lower (block 380) threshold. If $y_n > y_{highT}$ or $y_n < y_{lowT}$ then $y_n$ is marked as a potential anormal time value.

The main steps performed in forecasting a time series of application monitoring data, observability data and data observability data are shown in Figs. 19 and 19b, see above.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1.  A computer-implemented method for detecting an anomaly in application monitoring data in a distributed computing environment, comprising:

    - receiving, by a computer processor, training time series data for a given variable, y, in the distributed computing environment;
    - training, by the computer processor, a first probabilistic model using the training time series data, where the first probabilistic model predicts a lower quantile value corresponding to a lower quantile for the given variable;
    - training, by the computer processor, a second probabilistic model using the training time series data, where the second probabilistic model predicts a higher quantile value corresponding to a higher quantile for the given variable, and the higher quantile is larger than the lower quantile;
    - receiving, by a computer processor, time series data for the given variable, y, in the distributed computing environment;
    - extracting, by the computer processor, a time series, $(y_0, \ldots, y_{n-1})$, for the given variable, where the time series comprises the last n values of the time series data;
    - calculating, by the computer processor, a lower quantile forecast using the time series and the first probabilistic model;
    - calculating, by the computer processor, a higher quantile forecast using the time series and the second probabilistic model;
    - calculating, by the computer processor, a low threshold for the given variable and a high threshold for the given variable based on the lower quantile forecast and the higher quantile forecast;
    - receiving, by the computer processor, a new value, $y_n$, for the given variable;
    - comparing, by the computer processor, the new value of the given variable to the low threshold and to the high threshold; and
    - marking, by the computer processor, the new value of the given variable as an anomaly in response to the new value being one of less than the low threshold or greater than the high threshold.

2.  The method of claim 1 further comprising:

    - appending, by the computer processor, the new value, $y_n$, of the given variable, y, at the end of the time series;
    - extracting, by the computer processor, a next time series, $(y_1, \ldots, y_n)$, for the given variable, y, where the next time series comprises the last n values of the time series;
    - calculating, by the computer processor, a lower quantile forecast using the next time series and the first probabilistic model;
    - calculating, by the computer processor, a higher quantile forecast using the next time series and the second probabilistic model;
    - calculating, by the computer processor, a low threshold for the given variable and a high threshold for the given variable based on the lower quantile forecast and the higher quantile forecast;
    - receiving, by the computer processor, a next new value, yn+1, for the given variable;
    - comparing, by the computer processor, the next new value of the given variable to the low threshold and to the high threshold; and
    - marking, by the computer processor, the next new value of the given variable as an anomaly in response to the next new value being one of less than the low threshold or greater than the high threshold.

3.  The method according to at least one of the preceding claims, wherein calculating the low and high thresholds comprises:

    - determining a minimum value for the given variable using the lower quantile forecast and the higher quantile forecast and determining a maximum value for the given variable using the lower quantile forecast and the higher quantile forecast, thereby defining a range for the given variable;
    - generating random numbers evenly distributed between zero and one;
    - for each random number, mapping the given random number to a corresponding value in the range, thereby generating a set a values for the given variable; and
    - determining the low threshold and the high threshold from the set of values for the given variable.

4.  The method of claim 3, wherein the mapping the given random number to a corresponding value in the range is by linear interpolation, preferably by piecewise linear interpolation.

5. The method according to at least one of the preceding claims, wherein at least one of the first probabilistic model and the second probabilistic model is further defined as a linear regression model.

6. The method according to at least one of the preceding claims further comprises training at least one of the first probabilistic model and the second probabilistic model using a Regularized Smoothed Iterative Least Square method.

7. The method of claim 6, where training at least one of the first probabilistic model and the second probabilistic model minimizes the pinball loss.

8. The method according to at least one of the preceding claims further comprises training at least one of the first probabilistic model and the second probabilistic model using a Coordinate Descent method.

9. A computer-implemented method for forecasting application monitoring data in a distributed computing environment, comprising:

> a) receiving, by a computer processor, training time series data for a given variable, y, in the distributed computing environment;
> b) training, by the computer processor, a first probabilistic model using the training time series data, where the first probabilistic model predicts a lower quantile value corresponding to a lower quantile for the given variable;
> c) training, by the computer processor, a second probabilistic model using the training time series data, where the second probabilistic model predicts a higher quantile value corresponding to a higher quantile for the given variable, and the higher quantile is larger than the lower quantile;
> d) receiving, by a computer processor, time series data for the given variable, y, in the distributed computing environment;
> e) computing multiple paths of forecasts by:
>
> > i) extracting, by the computer processor, a time series, $(y_0, \ldots, y_{n-1})$, for the given variable, where the time series comprises the last n data points of the time series data;
> > ii) calculating, by the computer processor, a lower quantile forecast using the time series and the first probabilistic model;
> > iii) calculating, by the computer processor, a higher quantile forecast using the time series and the second probabilistic model;
> > iv) determining a minimum value for the given variable using the lower quantile forecast and the higher quantile forecast and determining a maximum value for the given variable using the lower quantile forecast and the higher quantile forecast, thereby defining a range for the given variable;
> > v) generating a random number evenly distributed between zero and one;
> > vi) generating a forecast value for the given variable by mapping the random number to a corresponding value in the range;
> > vii) appending, by the computer processor, the forecast value of the given variable, y, at the end of the time series;
> > viii) repeating steps i-vii until a stop criterion is reached;
>
> f) identifying, by the computer processor, quantiles in the multiple paths of forecasts; and
> g) reporting the quantiles to the method customer.

10. A computer-implemented method for forecasting application monitoring data in a distributed computing environment, comprising:

> a) receiving, by a computer processor, training time series data for a given variable, y, in the distributed computing environment;
> b) training, by the computer processor, a first probabilistic model using the training time series data, where the first probabilistic model predicts a lower quantile value corresponding to a lower quantile for the given variable;
> c) training, by the computer processor, a second probabilistic model using the training time series data, where the second probabilistic model predicts a higher quantile value corresponding to a higher quantile for the given variable, and the higher quantile is larger than the lower quantile;
> d) receiving, by a computer processor, time series data for the given variable, y, in the distributed computing environment;
> e) extracting, by the computer processor, a time series, $y_0, \ldots, y_{n-1}$, for the given variable, y, where the time series comprises the last n data points of the time series data;

f) calculating, by the computer processor, a lower quantile forecast using the time series and the first probabilistic model;

g) calculating, by the computer processor, a higher quantile forecast using the time series and the second probabilistic model;

h) determining a minimum value for the given variable using the lower quantile forecast and the higher quantile forecast and determining a maximum value for the given variable using the lower quantile forecast and the higher quantile forecast, thereby defining a range for the given variable;

i) generating random numbers evenly distributed between zero and one;

j) for each random number, mapping the given random number to a corresponding value in the range, thereby generating a set of forecast values for the given variable;

k) for each forecast value in the set of forecast values, appending, by the computer processor, a given forecast value to the time series and extracting the last n data points of the time series;

l) repeating steps f-k until a stop criterion is reached;

m) identifying, by the computer processor, quantiles in the forecast values;

n) reporting the quantiles to the method customer.

11. The method according to claim 9 or 10, wherein at least one of the first probabilistic model, and the second probabilistic model is further defined as a linear regression model.

12. The method according to at least one of claims 9 to 11 further comprises training at least one of the first probabilistic model, and the second probabilistic model using a Regularized Smoothed Iterative Least Square method.

13. The method of claim 12, where training at least one of the first probabilistic model and the second probabilistic model minimizes the pinball loss.

14. The method according to at least one of claims 9 to 13 further comprises training at least one of the first probabilistic model, and the second probabilistic model using a Coordinate Descent method.

15. The method according to at least one of claims 9 to 14, wherein the lower quantile and the higher quantile are symmetrical in relation to the median.

# Fig. 1 State of the art

disk: /mount        75% full                      95% full

⚠ Warning disk: /mount >75%

Alarm disk: /mount >95%

# Fig. 2 State of the art

5.000 disks

Warning disk: /mount >75%

Alarm disk: /mount >95%

Warning disk: /mount >75%

Alarm disk: /mount >95%

Warning disk: /mount >75%

Alarm disk: /mount >95%

# Fig. 3

disk: /mount

Capacity

Prediction

95%

75%

Warning    Alarm    t

# Fig. 4

y(t0...t2000)

## Fig. 5

y(t0...t500)

## Fig. 6

y(t1500...t2000)

## Fig. 7a

Quantile loss function (τ = 0.1)

## Fig. 7b

Quantile loss (τ = 0.1)

## Fig. 8

| t | y[t-1] | y[t-2] | y[t-3] | y[t-4] | y[t-5] | y[t-6] | y[t-7] | y[t-8] | y[t-9] | y[t-10] | y[t-11] | y[t-12] | y[t-13] | y[t-14] | y[t-15] | y[t-16] | y[t-17] | y[t-18] | y[t-19] | y[t-20] | intercept |
|---|---|---|---|---|---|---|---|---|---|---|---|---|---|---|---|---|---|---|---|---|---|
| 20 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 10.73 | 6.58 | 2.01 | 1 |
| 21 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 10.73 | 6.58 | 1 |
| 22 | 9.18 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 10.73 | 1 |
| 23 | 10.98 | 9.18 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 1 |
| 24 | 9.53 | 10.98 | 9.18 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 1 |
| ... | ... | ... | ... | ... | ... | ... | ... | ... | ... | ... | ... | ... | ... | ... | ... | ... | ... | ... | ... | ... | |
| 1995 | -1.24 | -1.34 | -2.13 | -4.24 | -4.96 | -5.50 | -5.72 | -3.59 | 1.25 | 3.54 | 8.11 | 11.23 | 8.11 | 8.75 | 1.16 | -1.87 | -4.86 | -5.97 | -8.33 | -5.31 | 1 |
| 1996 | -3.91 | -1.24 | -1.34 | -2.13 | -4.24 | -4.96 | -5.50 | -5.72 | -3.59 | 1.25 | 3.54 | 8.11 | 11.23 | 8.11 | 8.75 | 1.16 | -1.87 | -4.86 | -5.97 | -8.33 | 1 |
| 1997 | -3.67 | -3.91 | -1.24 | -1.34 | -2.13 | -4.24 | -4.96 | -5.50 | -5.72 | -3.59 | 1.25 | 3.54 | 8.11 | 11.23 | 8.11 | 8.75 | 1.16 | -1.87 | -4.86 | -5.97 | 1 |
| 1998 | -4.09 | -3.67 | -3.91 | -1.24 | -1.34 | -2.13 | -4.24 | -4.96 | -5.50 | -5.72 | -3.59 | 1.25 | 3.54 | 8.11 | 11.23 | 8.11 | 8.75 | 1.16 | -1.87 | -4.86 | 1 |
| 1999 | 0.43 | -4.09 | -3.67 | -3.91 | -1.24 | -1.34 | -2.13 | -4.24 | -4.96 | -5.50 | -5.72 | -3.59 | 1.25 | 3.54 | 8.11 | 11.23 | 8.11 | 8.75 | 1.16 | -1.87 | 1 |

## Fig. 9

Test data vs. Quantiles of forecast

## Fig. 10

10 Samples of Monte Carlo Sampling

## Fig. 11

## Fig. 12

## Fig. 13

Training data

## Fig. 14

| t | y(t-1) | y(t-2) | y(t-3) | y(t-4) | y(t-5) | y(t-6) | y(t-7) | y(t-8) | y(t-9) | y(t-10) | y(t-11) | y(t-12) | y(t-13) | y(t-14) | y(t-15) | y(t-16) | y(t-17) | y(t-18) | y(t-19) | y(t-20) | intercept |
|---|---|---|---|---|---|---|---|---|---|---|---|---|---|---|---|---|---|---|---|---|---|
| 20 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 10.73 | 6.58 | 2.01 | 1.0 |
| 21 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 10.73 | 6.58 | 1.0 |
| 22 | 9.18 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 10.73 | 1.0 |
| 23 | 10.98 | 9.18 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 10.00 | 1.0 |
| 24 | 9.53 | 10.98 | 9.18 | 3.43 | 2.58 | -1.12 | -3.42 | -1.86 | -2.86 | -1.24 | -2.51 | -1.00 | -4.81 | -4.50 | -5.67 | -5.16 | -2.22 | 0.01 | 5.17 | 8.91 | 1.0 |

## Fig. 15

| t | y(t-1) | y(t-2) | y(t-3) | y(t-4) | y(t-5) | y(t-6) | y(t-7) | y(t-8) | y(t-9) | y(t-10) | y(t-11) | y(t-12) | y(t-13) | y(t-14) | y(t-15) | y(t-16) | y(t-17) | y(t-18) | y(t-19) | y(t-20) | intercept |
|---|---|---|---|---|---|---|---|---|---|---|---|---|---|---|---|---|---|---|---|---|---|
| 135 | 1.12 | 6.57 | 6.10 | 8.36 | 5.10 | 3.34 | 3.84 | 1.05 | 0.72 | 1.36 | 1.02 | 1.06 | 0.02 | -3.54 | -6.36 | -7.20 | -8.07 | -7.44 | -4.24 | 2.16 | 1.0 |
| 136 | -2.93 | 1.12 | 6.57 | 6.10 | 8.36 | 5.10 | 3.34 | 3.84 | 1.05 | 0.72 | 1.36 | 1.02 | 1.06 | 0.02 | -3.54 | -6.36 | -7.20 | -8.07 | -7.44 | -4.24 | 1.0 |
| 137 | -6.21 | -2.93 | 1.12 | 6.57 | 6.10 | 8.36 | 5.10 | 3.34 | 3.84 | 1.05 | 0.72 | 1.36 | 1.02 | 1.06 | 0.02 | -3.54 | -6.36 | -7.20 | -8.07 | -7.44 | 1.0 |
| 138 | -8.23 | -6.21 | -2.93 | 1.12 | 6.57 | 6.10 | 8.36 | 5.10 | 3.34 | 3.84 | 1.05 | 0.72 | 1.36 | 1.02 | 1.06 | 0.02 | -3.54 | -6.36 | -7.20 | -8.07 | 1.0 |
| 139 | -8.81 | -8.23 | -6.21 | -2.93 | 1.12 | 6.57 | 6.10 | 8.36 | 5.10 | 3.34 | 3.84 | 1.05 | 0.72 | 1.36 | 1.02 | 1.06 | 0.02 | -3.54 | -6.36 | -7.20 | 1.0 |

# Fig. 16

Forecast vs. test data

# Fig. 20

**Examples of mapping functions**

# Fig. 17

# Fig. 18

# Fig. 19a

# Fig. 19b

START

400 — Receive training time series data → Train probabilistic models — 410

420 — Extract time series ← Receive time series data — 415

421 — Calculate lower quantile forecast

422 — Calculate median quantile forecast

423 — Calculate higher quantile forecast

430 — Determine range by min and max values

440 — Generate multiple random numbers

450 — Generate forecasts by mapping random numbers into range

460 — Append forecasts to time series

470 — Stop condition met?

NO → Next time step

YES

480 — Identify quantiles

490 — Report quantiles

END

# Fig. 21

Legend:
- O Data points
- —··—··— Piecewise linear extrapolation
- — — — LMS Curve fitting

Y-axis: Mapped values
X-axis: Quantiles || Random number

T = 0.25
T = 0.5
T = 0.75

# Fig. 22

Y-axis: Range
X-axis: Random number

T = 0.25
T = 0.5
T = 0.75